# EUROPÄISCHE PATENTSCHRIFT

(11) **EP 3 132 975 B1**
(45) Veröffentlichungstag und Bekanntmachung des Hinweises auf die Patenterteilung: **01.05.2019**
(21) Anmeldenummer: 16184470.9
(22) Anmeldetag: 17.08.2016
(51) Int. Cl.: B60R 7/04

(54) **MONTAGEEINRICHTUNG ZUM MONTIEREN EINER ADAPTERVORRICHTUNG ZUM BEFESTIGEN VON AUFNAHMEKÖRPERN AN EINEM KRAFTFAHRZEUGSITZ**
MOUNTING DEVICE FOR MOUNTING AN ADAPTER DEVICE FOR FIXING HOLDER BODIES TO A MOTOR VEHICLE SEAT
DISPOSITIF DE MONTAGE D'UN DISPOSITIF ADAPTATEUR POUR FIXER DES RECEPTACLES SUR UN SIEGE DE VEHICULE AUTOMOBILE

(30) Priorität: 17.08.2015 DE 102015113584
(43) Veröffentlichungstag der Anmeldung: 22.02.2017
(73) Patentinhaber: Adolf Würth GmbH & Co. KG, 74653 Künzelsau (DE); Würth International AG, 7000 Chur (CH)
(72) Erfinder: KOCH, Simon, 74677 Dörzbach (DE); STARKE, Johannes, 74248 Ellhofen (DE); HOHL, Wolfgang, 74653 Künzelsau (DE)
(74) Vertreter: Dilg, Haeusler, Schindelmann Patentanwaltsgesellschaft mbH

(56) Entgegenhaltungen:
- DE-U1-202006 008 165
- DE-U1-202010 008 803
- DE-U1-202012 011 474
- US-A1- 2008 303 321
- US-A1- 2014 263 515

## Beschreibung

Die Erfindung betrifft eine Montageeinrichtung und ein Verfahren zum Montieren einer Adaptervorrichtung zum Befestigen von Aufnahmekörpern an einem Kraftfahrzeugsitz, eine Montagevorrichtung und eine Montageanordnung.

Für bestimmte Anwendungszwecke ist es wünschenswert, Koffer für den Transport zu sichern. Für diesen Zweck gibt es verschiedene Lösungen. Zum einen werden die Bodenseiten der Koffer aneinander gehalten und an der Griffseite über einen Drehmechanismus miteinander verrastet, wodurch zwei Koffer aneinandergehalten sind (siehe zum Beispiel EP 2315701). Zum anderen können bei einem Koffer seitliche Klammern vorgesehen sein, die bei Anordnen eines weiteren Koffers auf dem bereits vorhandenen betätigt werden und dann zwei Koffer miteinander verrasten (siehe zum Beispiel DE 19900361, EP 1238602).

US 2014/0263515 A1 offenbart eine Basisstation, welche eine Basis und Halteklemmen aufweist. Die Halteklemmen sind konfiguriert, auf einen Umriss einer Ausrüstung angepasst zu sein. Ferner weist die Basisstation ein Verschlusssystem auf, welches konfiguriert ist, die Basis an unteren Sitzverankerungen zu sichern. Das Verschlusssystem umfasst ein Band, welches über eine Einstellschlaufe in seiner Länge an Gegebenheiten anpassbar ist.

Die bestehenden Verrastungen und Verriegelungen sind aufwändig und fehleranfällig. Ferner ist zum Teil nachteilig, dass auftretende Kräfte über den Kofferdeckel und einen Drehmechanismus abgeführt werden, wodurch diese fehleranfällig sind.

Das Handhaben und Befestigen von Koffern oder anderen Aufnahmekörpern unterschiedlicher Größe in benutzerfreundlicher Weise ist immer noch schwierig.

Es ist eine Aufgabe der vorliegenden Erfindung, in flexibler Weise ein benutzerfreundliches Montieren unterschiedlicher Aufnahmekörper zu ermöglichen.

Diese Aufgabe wird durch die Gegenstände mit den Merkmalen gemäß den unabhängigen Patentansprüchen gelöst. Weitere Ausführungsbeispiele sind in den abhängigen Ansprüchen gezeigt.

Gemäß einem Ausführungsbeispiel der vorliegenden Erfindung ist eine Montageeinrichtung zum Montieren einer Adaptervorrichtung zum Befestigen von Aufnahmekörpern (insbesondere von mindestens einem Koffer) an einem Kraftfahrzeugsitz geschaffen, wobei die Montageeinrichtung einen Basiskörper zum Aufsetzen auf den Kraftfahrzeugsitz, Steckelemente, die (insbesondere mittels flexibler Verbindungselemente wie Gurte oder Seile) an dem Basiskörper angebracht sind und zum Verankern der Montageeinrichtung an Fixierstrukturen des Kraftfahrzeugsitzes eingerichtet sind, und eine Montagestruktur an dem Basiskörper aufweist, die zum Montieren der Adaptervorrichtung zum Befestigen von Aufnahmekörpern eingerichtet ist.

Gemäß einem weiteren Ausführungsbeispiel der vorliegenden Erfindung ist eine Montagevorrichtung zum Befestigen von Aufnahmekörpern an einem Kraftfahrzeugsitz bereitgestellt, die eine Adaptervorrichtung zum Befestigen von Aufnahmekörpern und eine Montageeinrichtung mit den oben beschriebenen Merkmalen aufweist, an deren Montagestruktur die Adaptervorrichtung montiert ist.

Gemäß einem weiteren Ausführungsbeispiel der vorliegenden Erfindung ist eine Montageanordnung bereitgestellt, die eine Montagevorrichtung mit den oben beschriebenen Merkmalen und mindestens einen Aufnahmekörper aufweist, der an der Adaptervorrichtung befestigt ist.

Gemäß noch einem anderen Ausführungsbeispiel der vorliegenden Erfindung ist ein Verfahren zum Montieren einer Adaptervorrichtung zum Befestigen von Aufnahmekörpern an einem Kraftfahrzeugsitz bereitgestellt, wobei bei dem Verfahren ein Basiskörper einer Montageeinrichtung auf den Kraftfahrzeugsitz aufgesetzt wird, die Montageeinrichtung an Fixierstrukturen des Kraftfahrzeugsitzes mittels Steckelementen verankert wird, die an dem Basiskörper angebracht sind, und die Adaptervorrichtung zum Befestigen von Aufnahmekörpern an einer Montagestruktur an dem Basiskörper montiert wird.

Gemäß einem exemplarischen Ausführungsbeispiel der Erfindung ist eine einfache und effektive Möglichkeit geschaffen, wie ein mit einem Kraftfahrzeug im Einsatz befindlicher Monteur in sicherer und zuverlässiger und Weise verschiedenste unterschiedliche Aufnahmekörper (wie zum Beispiel Koffer unterschiedlicher Größe, Aufbewahrungsboxen, etc.) in dem Kraftfahrzeug mit sich führen kann. Zu diesem Zweck wird ein Basiskörper eine Montageeinrichtung mit einer Montagestruktur ausgestattet, die mit einer Befestigungsstruktur einer Adaptervorrichtung - mit Kopplungsstrukturen zum Aufnehmen unterschiedlicher Aufnahmekörper - starr befestigt werden kann. Im montierten Zustand liegen die Kopplungsstrukturen der Adaptervorrichtung vorzugsweise frei, um die unterschiedlichen Aufnahmekörper im montierten Zustand der Adaptervorrichtung an dieser befestigen zu können.

Die Steckelemente, die zum Beispiel über flexible Verbindungselemente (wie zum Beispiel Gurte oder Seile) an dem Basiskörper befestigt sind, können ihrerseits durch einen Benutzer zum Ausbilden einer Steckverbindung mit Fixierstrukturen an dem Kraftfahrzeugsitz verbunden werden, um eine Befestigung der Montageeinrichtung an einer Trägerstruktur des Kraftfahrzeugs (insbesondere an dessen Karosserie) zu bewerkstelligen. Durch Zusammenstecken der Steckelemente mit den Fixierstrukturen allein kann ein gesichertes Befestigen von Transportgut in dem oder den Aufnahmekörpern an der Adaptervorrichtung der Montageeinrichtung an dem Kraftfahrzeug erfolgen, so dass selbst im Fahrbetrieb des Kraftfahrzeugs bei hoher Betriebssicherheit ein einfaches Mitführen von Transportgut durch einen Monteur im Einsatz ermöglicht ist.

Im Weiteren werden zusätzliche exemplarische Ausführungsbeispiele der Montageeinrichtung, der Montagevorrichtung, der Montageanordnung und des Verfahrens beschrieben.

Gemäß einem exemplarischen Ausführungsbeispiel kann der Basiskörper, der insbesondere als Schlitten ausgestaltet sein kann, als Gestängekonstruktion, insbesondere Metallgestängekonstruktion, ausgebildet sein. Auf diese Weise kann die Montageeinrichtung leichtgewichtig ausgestaltet werden und daher von einem Monteur auch unterwegs mitgeführt werden. Dies kann dadurch weiter erleichtert werden, dass in der zum Beispiel plattenförmigen Adaptervorrichtung eine Aussparung als ebenfalls leicht gewichtiger Tragegriff ausgebildet ist, sodass ein Benutzer die an der Montageeinrichtung montierte Adaptervorrichtung ebenfalls als portables Gerät verwenden kann. Gleichzeitig bildet eine solche Gestängekonstruktion eine mechanisch stabile Basis zum Aufnehmen von Adaptervorrichtung und mindestens einem daran montierten Aufnahmekörper.

Gemäß einem exemplarischen Ausführungsbeispiel kann die Gestängekonstruktion einander gegenüberliegende, insbesondere zueinander parallel verlaufende, erste Gestänge aufweisen, die sich entlang einer Sitzfläche (insbesondere von einer Rückenlehne hin zu einem freien Ende der Sitzfläche) des Kraftfahrzeugsitzes erstrecken und sich im montierten Zustand der Adaptervorrichtung unterhalb der Adaptervorrichtung befinden.

Gemäß einem exemplarischen Ausführungsbeispiel kann die Gestängekonstruktion einander gegenüberliegende, insbesondere schlaufenförmige, zweite Gestänge aufweisen, die sich jeweils zumindest abschnittsweise in Richtung entlang einer Rückenlehne des Kraftfahrzeugsitzes (und insbesondere senkrecht zu den ersten Gestängen) erstrecken und von denen sich im montierten Zustand der Adaptervorrichtung zumindest eine zumindest abschnittsweise über zumindest einen Teil der Adaptervorrichtung vertikal hinaus erstreckt. Die zweiten Gestänge, die sich vorzugsweise vertikal höher erstrecken als die ersten Gestänge, sorgen für eine sichere Anlage der Gestängekonstruktion an der Rückenlehne und tragen daher zur Stabilität bei. Vorzugsweise können die ersten Gestänge und die zweiten Gestänge leichtgewichtig und konstruktiv einfach als gebogene und/oder miteinander verschweißte Metallrohre ausgestaltet werden.

Gemäß einem exemplarischen Ausführungsbeispiel kann sich eines der zweiten Gestänge angrenzend an die Rückenlehne wesentlich weiter bzw. höher vertikal entlang der Rückenlehne aufwärts erstrecken, insbesondere eine mindestens dreifache vertikale Erstreckungslänge haben, als ein anderes der zweiten Gestänge, das ein von der Rückenlehne am weitesten entferntes Ende des Basiskörpers bildet. Ein solches insbesondere schlaufenförmiges zweites Gestänge angrenzend an die Rückenlehne kann leichtgewichtig und konstruktiv einfach zum Schonen der Rückenlehne und zum Schutz derselben vor einer Beschädigung beitragen, da ein solches zweites Gestänge einen direkten Kontakt von auf der Adaptervorrichtung montierten Aufnahmekörpern mit der Rückenlehne schützend unterbindet. Auch kann durch eine solche Konstruktion ein unerwünschtes Verkippen der Montageeinrichtung samt montierter Adapterplatte und Aufnahmekörper daran vermieden werden, selbst wenn ein Kraftfahrzeug schnell beschleunigt oder bremst.

Gemäß einem exemplarischen Ausführungsbeispiel kann die Montagestruktur (insbesondere vertikal verlaufende und langgestreckte, was vorteilhaft zu einer vertikalen Krafteinleitung führt) Montagelöcher an dem Basiskörper und Montagebolzen (insbesondere Montageschrauben) zum Durchführen durch die Montagelöcher und durch korrespondierende Befestigungslöcher oder sonstige Befestigungsstrukturen der Adaptervorrichtung aufweisen, wobei die Adaptervorrichtung mittels Einführens der Montagebolzen in die Montagelöcher und die Befestigungslöcher und mittels Befestigens (insbesondere Verschraubens) der Montagebolzen an den Montagelöchern und/oder den Befestigungslöchern an der Montageeinrichtung montierbar ist. Die Montagelöcher der Montagestruktur können langgestreckt als Hohlräume in einem jeweiligen Rohrstück implementiert werden, wobei das Rohrstück Teil der Gestängekonstruktion bilden kann bzw. mit einzelnen Gestängeteilen fest verbunden (zum Beispiel verschweißt) sein kann. Dies sorgt für eine hochstabile Verbindung zwischen Montageeinrichtung und Adaptervorrichtung und erlaubt selbst die Befestigung schwergewichtiger Aufnahmekörper. Vorzugsweise wird mittels der Montagestruktur eine Vierpunktbefestigung zwischen Adaptervorrichtung und Montageeinrichtung bewerkstelligt.

Erfindungsgemäß sind die Steckelemente als Isofix-Steckelemente ausgebildet, die zum Verankern an Isofix-Fixierstrukturen des Kraftfahrzeugsitzes eingerichtet sind. Isofix-Fixierstrukturen stellen ein sicheres und einfach zu bedienendes Befestigungssystem für eine Adaptervorrichtung zum Aufnehmen unterschiedlicher Aufnahmekörper an einem Kraftfahrzeugsitz bereit, bei dem eine starre Verbindung zwischen Karosserie und Aufnahmekörper über die Montageeinrichtung hergestellt wird. Isofix-Fixierstrukturen des Kraftfahrzeugsitzes sind entsprechend der Norm ISO 13216 (insbesondere in der Fassung von 1999 oder 2004 oder 2006) standardisiert und somit in vielen Kraftfahrzeugsitzen standardmäßig enthalten. Isofix-Fixierstrukturen des Kraftfahrzeugsitzes weisen zwei Haltebügel auf, die sich in einem festen Abstand zueinander in einem Spalt zwischen Rückenlehnfläche und Sitzfläche des Kraftfahrzeugsitzes befinden. Die Steckelemente der Montageeinrichtung können in diese Haltebügel verhakt werden und daran unter Ausbildung einer Klemmverbindung befestigt werden.

Gemäß einem exemplarischen Ausführungsbeispiel können die ein, zwei oder mehr Steckelemente mittels Rasthaken realisiert werden, die zum Beispiel über eine Klickfunktion in einen jeweiligen (zum Beispiel zum Bilden einer Aufnahmeöse U-förmigen) Haltebügel der Fixierstrukturen in dem Kraftfahrzeug greifen. Wenn die Steckelemente der Montageeinrichtung an einen solchen Haltebügel angesteckt werden, verrasten die Rasthaken an den Haltebügeln unter Ausbildung einer starren Verbindung.

Vorteilhaft kann zusätzlich zur Befestigung an den Haltebügeln eine zweite Fixierung der Montageeinrichtung an dem Kraftfahrzeugsitz erfolgen. Diese zweite Fixierung kann zum Beispiel mittels eines Sicherheitsgurts an dem Kraftfahrzeugsitz erfolgen. An der Montageeinrichtung und/oder an der Adapterplatte können Vorkehrungen getroffen sein, den Sicherheitsgurt daran zu befestigen.

Gemäß einem exemplarischen Ausführungsbeispiel können die Steckelemente mittels flexibler Verbindungselemente, insbesondere Verbindungsgurte und/oder Verbindungsseile, an dem Basiskörper befestigt sein. Solche flexiblen Verbindungselemente können einerseits die erforderliche Zugfestigkeit aufweisen, um eine feste Verbindung der Montageeinrichtung mit dem Kraftfahrzeugsitz zu gewährleisten und erlauben einem Benutzer gleichermaßen eine komfortable Handhabung der Steckelemente vor einem Festzurren der flexiblen Verbindungselemente. Anders ausgedrückt kann ein Benutzer die Steckelemente zum Beispiel aus einer Steckelementaufnahme händisch herausziehen und mit den Fixierstrukturen des Kraftfahrzeuggesetzes in eine Steckverbindung bringen. Dabei erlauben die flexiblen Verbindungselemente einem Benutzer eine frei wählbare Handhabung. Durch Ausübung einer Zugkraft können die flexiblen Elemente nachfolgend festgezurrt werden. Vorteilhaft werden beim Festzurren die Steckelemente in die Steckelementaufnahmen zurückgezogen, was (zum Beispiel aufgrund einer formschlüssigen Anpassung von Steckelementen und Steckelementaufnahmen) vorzugsweise eine definierte Soll-Orientierung der Steckelemente zur Folge hat.

Gemäß einem exemplarischen Ausführungsbeispiel kann die Montageeinrichtung eine Spannvorrichtung aufweisen, die von einem Benutzer betätigbar ist, um nach dem Verankern der Steckelemente an den Fixierstrukturen die flexiblen Verbindungselemente unter Ausbildung einer zugfesten Verbindung zu spannen. Die Spannvorrichtung kann als eine von einem Benutzer handhabbare Klemme ausgebildet sein, durch welche ein Ende der flexiblen Verbindungselemente hindurchgeführt werden kann, straff gezogen werden kann und nachfolgend durch Betätigen der Klemme in einem gespannten Zustand fixiert werden kann. Die Spannvorrichtung kann vorzugsweise an einem der Rückenlehne des Kraftfahrzeugsitzes gegenüberliegenden Seite der Montageeinrichtung angeordnet sein und kann in dieser Position von einem Benutzer frei gehandhabt werden. Die flexiblen Verbindungselemente können an einer Unterseite der Adaptervorrichtung bzw. in einem Zwischenraum zwischen der Adaptervorrichtung und einer Sitzfläche des Kraftfahrzeugsitzes zwischen Gestängen der Basisstruktur geführt werden. Dadurch wird eine Störung des Montierens oder Demontierens von Aufnahmekörpern an einer oberseitigen Aufnahmefläche der Adaptervorrichtung durch die flexiblen Verbindungselemente unterbunden.

Erfindungsgemäß weist die Montageeinrichtung eine an dem Basiskörper angebrachte Führungsaufnahme (oder Steckelementaufnahme) zum geführten Aufnehmen der Steckelemente auf. In einem unbenutzten Zustand können die Steckelemente in einer jeweiligen Führungsaufnahme platzsparend untergebracht werden und bei Bedarf von einem Benutzer aus der jeweiligen Führungsaufnahme händisch herausgezogen werden.

Gemäß einem exemplarischen Ausführungsbeispiel können die Steckelemente ausgebildet sein, an Fixierstrukturen zwischen Rückenlehne und Sitzfläche des Kraftfahrzeugsitzes verankert zu werden und dadurch eine Verankerung im Inneren des Kraftfahrzeugsitzes zu bewerkstelligen. Wenn die Fixierstrukturen an der Karosserie des Kraftfahrzeuges befestigt sind, ist eine besonders stabile Befestigung ermöglicht.

Gemäß einem exemplarischen Ausführungsbeispiel kann die Montageeinrichtung eine Einstelleinrichtung aufweisen, die zum Einstellen einer Höhe und/oder eines Neigungswinkels der an der Montageeinrichtung montierten Adaptervorrichtung eingerichtet ist. Bei manchen Kraftfahrzeugen befindet sich die Sitzfläche in einer geneigten Position. Dies kann beim Anordnen von Aufnahmekörpern auf der Adaptervorrichtung durch die resultierende schräge Arbeitsfläche zu einem unerwünschten Verrutschen von Aufnahmekörpern oder Transportgut führen. Abhilfe schafft hier die genannte Einstelleinrichtung, mit der ein Benutzer einen Neigungswinkel der Montageeinrichtung so einstellen kann, dass sich die Adaptervorrichtung in einer horizontalen oder zumindest annähernd horizontalen Position befindet. Dies kann zum Beispiel dadurch erreicht werden, dass Teleskopstangen des Basiskörpers der Montageeinrichtung mit Fixierlöchern versehen werden, sodass ein Benutzer durch Einführen eines Fixierelements (zum Beispiel ein Bolzen) in ein ausgewähltes Fixierloch einen gewünschten Neigungswinkel der Adaptervorrichtung gegenüber der Sitzfläche einstellen kann.

Gemäß einem exemplarischen Ausführungsbeispiel kann die Montageeinrichtung Rollen aufweisen, die bodenseitig an dem Basiskörper angebracht sind, um die Montageeinrichtung in einem von dem Kraftfahrzeugsitz getrennten Zustand rollend fortzubewegen. Auf diese Weise kann die Montageeinrichtung mit einfachen Mitteln an eine gewünschte Position befördert werden. Vorzugsweise können die Rollen durch Betätigung einer Arretiereinrichtung arretiert werden, um ein Wegrollen der Montageeinrichtung samt daran montierter Adaptervorrichtung und gegebenenfalls Aufnahmekörpern zu verhindern.

Gemäß einem exemplarischen Ausführungsbeispiel kann die Adaptervorrichtung zum Befestigen von Aufnahmekörpern unterschiedlicher Größe ausgebildet sein. Dies erhöht weiter die Flexibilität in der Befestigung unterschiedlicher Aufnahmekörper an der Adaptervorrichtung.

Die Adaptervorrichtung kann eine Trägereinrichtung zum Tragen eines befestigten Aufnahmekörpers, erste Kopplungsstrukturen an der Trägereinrichtung, die zum Befestigen eines ersten Aufnahmekörpers einer ersten Größe mittels Aufschiebens und Verriegelns an den ersten Kopplungsstrukturen ausgebildet ist, und zweite Kopplungsstrukturen an der Trägereinrichtung aufweisen, die zum Befestigen eines zweiten Aufnahmekörpers einer zweiten Größe mittels Aufschiebens und Verriegelns an den zweiten Kopplungsstrukturen ausgebildet ist. Gemäß einem exemplarischen Ausführungsbeispiel der Erfindung ist somit eine Adaptervorrichtung bereitgestellt, die von einem Benutzer einfach handhabbar ist und mit unterschiedlich großen Aufnahmekörpern (zum Beispiel Koffern) in intuitiver Weise in unterschiedliche Verbindungszustände verbringbar ist. Mit einer einfachen Handhabung kann ein Benutzer einen in einem Verbindungszustand mit der Adaptervorrichtung befindlichen Aufnahmekörper auch wieder in einen anderen Verbindungszustand oder einen Trennzustand bringen. Insbesondere wenn dieser Aufnahmekörper von der Adaptervorrichtung wieder getrennt ist, ist diese frei zum Aufnehmen eines anderen, zum Beispiel anders dimensionierten Aufnahmekörpers. Dies kann mit einer einfachen und intuitiven Aufschiebe- und Verriegelungsbewegung bewerkstelligt werden, die zum Trennen der Verbindung in gleichartiger, inverser Weise gehandhabt wird. Mit einer einzigen plattenförmigen Adaptervorrichtung können somit unterschiedliche Aufnahmekörper unterschiedlicher Größe durch ein universelles System von Kopplungsstrukturen vorübergehend befestigt werden. Dies erlaubt es einem Benutzer, in modularer bzw. baukastenartiger Weise beliebige Kombinationen von Adaptervorrichtungen und Aufnahmekörpern zu einem gemeinsamen Körper zusammenzustellen.

Gemäß einem exemplarischen Ausführungsbeispiel kann die Trägereinrichtung als Trägerplatte ausgebildet sein. Dann kann die Trägereinrichtung als flache und vertikal kompakte Aufnahmeplattform mit einer großen Montagefläche zum Tragen des oder der Aufnahmekörper dienen.

Gemäß einem exemplarischen Ausführungsbeispiel können die ersten Kopplungsstrukturen mindestens eine erste Führungsschiene, insbesondere zwei zueinander parallele und in einem ersten Abstand voneinander beabstandete erste Führungsschienen, aufweisen, wobei entlang der mindestens einen ersten Führungsschiene der erste Aufnahmekörper bis zu einer ersten Verriegelungsposition aufschiebbar ist. Die mindestens eine erste Führungsschiene, besonders vorteilhaft aber ein Paar von zueinander parallelen ersten Führungsschienen, bietet einem Benutzer eine intuitive Möglichkeit, den ersten Aufnahmekörper mit korrekter Positionierung und somit fehlerrobust an der Adapterplatte zu montieren.

Gemäß einem exemplarischen Ausführungsbeispiel können die zweiten Kopplungsstrukturen mindestens eine zweite Führungsschiene, insbesondere zwei zueinander parallele und in einem von dem ersten Abstand unterschiedlichen zweiten Abstand voneinander beabstandete zweite Führungsschienen, aufweisen, wobei entlang der mindestens einen zweiten Führungsschiene der zweite Aufnahmekörper bis zu einer zweiten Verriegelungsposition aufschiebbar ist. Vorzugsweise ist die mindestens eine zweite Führungsschiene, bevorzugt ein Paar zueinander paralleler zweiter Führungsschienen, in entsprechender Weise zu der mindestens einen ersten Führungsschiene ausgebildet, trägt aber gleichzeitig der anderen Größe des zweiten Aufnahmekörpers Rechnung. Für einen Benutzer ist dadurch auf einen Blick erkennbar, wie die mindestens eine zweite Führungsschiene in Relation zu der mindestens einen ersten Führungsschienen zum Montieren des jeweiligen Aufnahmekörpers zu handhaben ist. Das Paar zweiter Führungsschienen kann parallel zu dem Paar erster Führungsschienen angeordnet und Letzteres seitlich einschließend angeordnet werden.

Gemäß einem exemplarischen Ausführungsbeispiel können die ersten Kopplungsstrukturen mindestens einen ersten Verriegelungskörper, insbesondere mindestens zwei entlang der mindestens einen ersten Führungsschiene beabstandete Verriegelungskörper, aufweisen, wobei bei Aufschieben des ersten Aufnahmekörpers entlang der mindestens einen ersten Führungsschiene bis zu der ersten Verriegelungsposition der mindestens eine erste Verriegelungskörper zum an der ersten Verriegelungsposition vertikal unabnehmbaren Verriegeln des ersten Aufnahmekörpers an der Adaptervorrichtung ausgebildet ist. Der mindestens eine erste Verriegelungskörper kann zum Beispiel derart oberhalb der mindestens einen ersten Führungsschiene über diese eingeschoben werden, dass korrespondierende Kopplungsstrukturen des aufgeschobenen ersten Aufnahmekörpers in der mindestens einen ersten Führungsschiene angeordnet sind und durch den darüber angeordneten mindestens einen ersten Verriegelungskörper vor einem vertikalen Abnehmen gehindert werden. Das Einschieben des mindestens einen ersten Verriegelungskörpers über die mindestens eine erste Führungsschiene erfolgt vorzugsweise vor dem Einschieben des ersten Aufnahmekörpers, kann alternativ dazu aber auch erst nach dem Einschieben des ersten Aufnahmekörpers durchgeführt werden.

Gemäß einem exemplarischen Ausführungsbeispiel können die zweiten Kopplungsstrukturen mindestens einen zweiten Verriegelungskörper, insbesondere zwei oder mehr entlang der mindestens einen zweiten Führungsschiene beabstandete Verriegelungskörper, aufweisen, wobei bei Aufschieben des zweiten Aufnahmekörpers entlang der mindestens einen zweiten Führungsschiene bis zu der zweiten Verriegelungsposition der mindestens eine zweite Verriegelungskörper zum an der zweiten Verriegelungsposition vertikal unabnehmbaren Verriegeln des zweiten Aufnahmekörpers an der Adaptervorrichtung ausgebildet ist. Der mindestens eine zweite Verriegelungskörper kann zum Beispiel derart oberhalb der mindestens einen zweiten Führungsschiene über diese eingeschoben werden, dass korrespondierende Kopplungsstrukturen des aufgeschobenen zweiten Aufnahmekörpers in der mindestens einen zweiten Führungsschiene angeordnet sind und durch den darüber angeordneten mindestens einen zweiten Verriegelungskörper vor einem vertikalen Abnehmen gehindert werden. Das Einschieben des mindestens einen zweiten Verriegelungskörpers über die mindestens eine zweite Führungsschiene erfolgt vorzugsweise vor dem Einschieben des zweiten Aufnahmekörpers, kann alternativ dazu aber auch erst nach dem Einschieben des zweiten Aufnahmekörpers durchgeführt werden.

Die Anzahl erster Verriegelungskörper und die Anzahl zweiter Verriegelungskörper kann unterschiedlich sein und zum Beispiel basierend darauf ausgewählt werden, welches Gewicht der jeweilige Aufnahmekörper hat. Je höher dieses Gewicht ist, umso höher kann die Anzahl erster bzw. zweiter Verriegelungskörper gewählt werden.

Gemäß einem exemplarischen Ausführungsbeispiel kann oder können der mindestens eine erste Verriegelungskörper und/oder der mindestens eine zweite Verriegelungskörper (insbesondere vor einem Verriegeln oder zum Verriegeln des jeweiligen Aufnahmekörpers) winkelig (insbesondere senkrecht) zu einer jeweiligen Führungsschiene verschiebbar sein (insbesondere unter Freilassen eines vertikalen Spalts zwischen einem Boden der jeweiligen Führungsschiene und dem jeweiligen Verriegelungskörper in die jeweilige Führungsschiene hinein verschiebbar sein). Mehrere erste bzw. zweite Verriegelungskörper können auch an einer jeweiligen gemeinsamen (insbesondere starren) Stützstruktur angebracht sein, um von einem Benutzer unter weiterer Vereinfachung der Handhabung kollektiv verschoben zu werden.

Gemäß einem exemplarischen Ausführungsbeispiel können die ersten Kopplungsstrukturen und/oder die zweiten Kopplungsstrukturen ausgebildet sein, dass der erste Aufnahmekörper oder der zweite Aufnahmekörper mittels der Kopplungsstrukturen auf der Adaptervorrichtung selektiv vertikal abnehmbar verschiebegesichert stapelbar ist, und/oder dass der jeweilige Aufnahmekörper und die Adaptervorrichtung mittels des Aufschiebens und des Verriegelns an den ersten Kopplungsstrukturen und/oder an den zweiten Kopplungsstrukturen vertikal unabnehmbar miteinander koppelbar sind. Der jeweilige Aufnahmekörper ist somit in Kombination mit der Adaptervorrichtung selektiv stapelbar oder koppelbar. Vorteilhaft kann ein Aufnahmeraum des Aufnahmekörpers im gestapelten oder gekoppelten Zustand immer noch von extern zugänglich sein. Insbesondere kann ein als Koffer ausgebildeter Aufnahmekörper im gestapelten oder gekoppelten Zustand immer noch zwischen einem Öffnungszustand und einem Schließzustand überführbar sein. Dadurch kann selbst im gekoppelten oder gestapelten Zustand ein Benutzer Zugang zum Inneren des Aufnahmekörpers der Aufnahmeanordnung erlangen.

In dem vertikal abnehmbaren, aber in einer Horizontalebene verschiebegesicherten Stapel-Zustand ist es möglich, dass ein Benutzer den Aufnahmekörper der miteinander verbundenen Körper (d.h. Aufnahmekörper und Adaptervorrichtung) durch bloßes vertikales Abheben von der Adaptervorrichtung trennt. Andererseits ist in diesem Zustand aber verunmöglicht, dass ein Körper gegenüber dem anderen Körper horizontal verschoben wird. Die Körper sind somit in diesem Betriebszustand verrutschfest gegeneinander gesichert, aber durch eine einzige Handbewegung sofort voneinander trennbar. Dieser Betriebszustand ist somit geeignet, um die beiden Körper vorübergehend zu stapeln.

Alternativ können die Körper (d.h. Aufnahmekörper und Adaptervorrichtung) aber auch vertikal unabnehmbar miteinander koppelbar sein, das heißt miteinander so verbunden sein, dass bei einer bloß vertikalen Abhebebewegung die Trennung der beiden Körper nicht ermöglicht ist. Eine Trennung der beiden Körper voneinander ist in diesem Betriebszustand nur durch Relativverschiebung der beiden Körper entlang einer horizontalen Verschieberichtung ermöglicht. Es ist ferner möglich, dass ausgehend von diesem durch Ausübung einer reinen Vertikalkraft unabnehmbar gekoppelten Verbindungszustand die gekoppelten Körper auch in einer Horizontalebene immobilisiert werden, indem zum Beispiel eine senkrecht zu einer Verschieberichtung der Körper wirkende Befestigungskraft ausgeübt wird, zum Beispiel mittels einer Rastverbindung zum dann auch horizontal verschiebegesicherten Koppeln der beiden Körper.

Gemäß einem exemplarischen Ausführungsbeispiel kann oder können der mindestens eine erste Verriegelungskörper und/oder der mindestens eine zweite Verriegelungskörper ausgebildet sein, dass der erste Aufnahmekörper oder der zweite Aufnahmekörper mittels eines jeweiligen der Verriegelungskörper auf der Adaptervorrichtung vertikal abnehmbar verschiebegesichert stapelbar ist. Hierzu ist es vorteilhaft möglich, dass der jeweilige mindestens eine Verriegelungskörper vertikal erhaben über einen ihn umgebenden Bereich der jeweiligen Führungsschiene hervorsteht, damit (vorteilhaft ausgehend von dem Aufnahmekörper unterseitig hervorstehende) Rastfüße (oder dergleichen) des zum Stapeln aufzunehmenden Aufnahmekörpers auf diese erhaben überstehenden Verriegelungskörper aufsetzen können. Dies erlaubt eine besonders kompakte Ausgestaltung der Adaptervorrichtung, da die Verriegelungskörper dann funktional sowohl zum Koppeln als auch zum Stapeln beitragen können.

Gemäß einem exemplarischen Ausführungsbeispiel kann die Adaptervorrichtung mindestens eine, insbesondere gegenüber der Trägereinrichtung ein- und ausklappbare, Anschlagstruktur aufweisen, die eingerichtet ist, dass nach Aufschieben des ersten Aufnahmekörpers und/oder des zweiten Aufnahmekörpers der jeweilige Aufnahmekörper an der mindestens einen Anschlagstruktur in einer Verriegelungsposition anschlägt, in welcher der jeweilige Aufnahmekörper an der Adaptervorrichtung verriegelbar oder verriegelt ist. Eine solche Anschlagstruktur hat den Vorteil, dass sie selbst ohne Blickkontakt (zum Beispiel bei einer Montage in einem schlecht beleuchteten oder optisch nicht zugänglichen Kofferraum eines Kraftfahrzeugs) einem Benutzer intuitiv anzeigt, wann ein an der Adaptervorrichtung zu montierender Aufnahmekörper seine gewünschte Befestigungsposition erreicht hat. Dies erhöht den Benutzerkomfort und verringert die Gefahr einer Fehlbedienung. Die Einklappbarkeit bzw. Versenkbarkeit solcher Anschlagstrukturen erlaubt es aber auch, bei Kopplung mehrerer Adaptervorrichtung hintereinander, einen Aufnahmekörper selbst ohne Blickkontakt zu einer hinteren Adaptervorrichtung durchzuschieben, ohne hierbei durch eine Anschlagstruktur gestört zu werden.

Gemäß einem exemplarischen Ausführungsbeispiel kann oder können die ersten Kopplungsstrukturen und/oder die zweiten Kopplungsstrukturen ferner eine erste Zusatzverriegelungseinrichtung zum zusätzlichen verschiebegesicherten Verriegeln des ersten Aufnahmekörpers aufweisen, wenn dieser an der Trägereinrichtung aufgeschoben und verriegelt ist, und/oder eine zweite Zusatzverriegelungseinrichtung zum zusätzlichen verschiebegesicherten Verriegeln des zweiten Aufnahmekörpers aufweisen, wenn dieser an der Trägereinrichtung aufgeschoben und verriegelt ist. Durch mindestens eine weitere Zusatzverriegelungseinrichtung an zumindest einem der zu verbindenden Körper (d.h. Adaptervorrichtung und Aufnahmekörper), vorzugsweise durch korrespondierende Kopplungsstrukturen an den beiden miteinander gekoppelten Körpern, kann hiermit ein dritter Verbindungszustand definiert werden, der im vertikal unabnehmbar gekoppelten Zustand der beiden Körper zusätzlich ein Relativverschieben derselben gegeneinander ermöglicht (zum Beispiel durch Deaktivierung der Zusatzverriegelungseinrichtung) oder ein Relativverschieben derselben gegeneinander verunmöglicht (zum Beispiel durch Aktivierung der Zusatzverriegelungseinrichtung). Um die zwei Körper (zum Beispiel für eine Autofahrt) zuverlässig aneinander zu sichern, können somit die beiden Zusatzverriegelungseinrichtung reversibel miteinander verriegelt werden.

Gemäß einem exemplarischen Ausführungsbeispiel kann die Adaptervorrichtung Befestigungslöcher zum Befestigen der Adaptervorrichtung an der Montageeinrichtung aufweisen, insbesondere Befestigungslöcher zum Aufnehmen von Montagebolzen der Montagestruktur der Montageeinrichtung. Zum Beispiel kann eine Befestigung zwischen Adaptervorrichtung und Montageeinrichtung in vier Eckbereichen der Adaptervorrichtung und in vier korrespondierenden Eckbereichen der Montageeinrichtung erfolgen.

Gemäß einem exemplarischen Ausführungsbeispiel kann der Aufnahmekörper ein Koffer zum Transportieren von Transportgut, ein erster Koffer einer ersten Größe und ein zweiter Koffer einer zweiten Größe, eine weitere Adaptervorrichtung und/oder eine Aufbewahrungsbox sein. Diese und andere Aufnahmekörper können aufgrund des Baukastensystems gemäß einem exemplarischen Ausführungsbeispiel der Erfindung in annähernd beliebiger Weise miteinander kombiniert werden.

Gemäß einem exemplarischen Ausführungsbeispiel kann die Montageeinrichtung zusätzlich mittels eines Fahrgastsicherungsgurts an dem Autositz befestigt werden. Somit kann zusätzlich zu der Befestigung an den Fixierstrukturen des Kraftfahrzeugsitzes auch der an dem Kraftfahrzeugsitz befindliche Gurt mitverwendet werden, um eine zusätzliche Befestigung der Montageeinrichtung zu bewerkstelligen. Dadurch wird die Betriebssicherheit weiter erhöht.

Im Folgenden werden exemplarische Ausführungsbeispiele der vorliegenden Erfindung mit Verweis auf die folgenden Figuren detailliert beschrieben.
Figur 1 zeigt einen Koffer als Aufnahmekörper einer Aufnahmeanordnung gemäß einem exemplarischen Ausführungsbeispiel der Erfindung in einem Öffnungszustand.
Figur 2 und Figur 3 zeigen den Koffer gemäß Figur 1 in einem geschlossenen Zustand.
Figur 4 zeigt einen Koffer, wie er in Figur 1 bis Figur 3 dargestellt ist, in einem mit einem anderen gleichartigen Koffer gekoppelten Zustand.
Figur 5 zeigt eine Oberseite und Figur 6 zeigt eine Unterseite einer Adaptervorrichtung gemäß einem exemplarischen Ausführungsbeispiel der Erfindung.
Figur 7 zeigt Komponenten zum Ausbilden von Kopplungsstrukturen der Adaptervorrichtung gemäß Figur 5 und Figur 6.
Figur 8 zeigt eine Verrutschschutzleiste mit einer Anordnung von Spikes der Adaptervorrichtung gemäß Figur 5 und Figur 6.
Figur 9 zeigt eine räumliche Ansicht einer Montageeinrichtung mit einer daran montierten Adaptervorrichtung, gemeinsam montiert an einem Kraftfahrzeugsitz, gemäß einem exemplarischen Ausführungsbeispiel der Erfindung.
Figur 10 zeigt eine unterseitige Ansicht einer Montageeinrichtung mit daran montierter Adaptervorrichtung gemäß einem exemplarischen Ausführungsbeispiel der Erfindung.
Figur 11 zeigt eine Erweiterungsanordnung gemäß einem exemplarischen Ausführungsbeispiel der Erfindung aus einer Erweiterungseinrichtung zum räumlichen Erweitern der Adaptervorrichtung gemäß Figur 5 und Figur 6 und der daran montierten Adaptervorrichtung sowie einer hieran befestigten Aufbewahrungsbox als Aufnahmekörper, an dem oberseitig eine weitere Adaptervorrichtung montiert ist.
Figur 12 zeigt eine Aufnahmeanordnung aus einem Aufnahmekörper und einer zu dessen Befestigung ausgebildeten Adaptervorrichtung gemäß einem exemplarischen Ausführungsbeispiel der Erfindung, wobei die Adaptervorrichtung ihrerseits an der Montageeinrichtung gemäß Figur 10 montiert ist.
Figur 13 zeigt die Aufnahmeanordnung gemäß Figur 12 in einem Betriebszustand, in dem der Aufnahmekörper vertikal abnehmbar verschiebegesichert auf der Adaptervorrichtung angeordnet ist.
Figur 14 zeigt die Aufnahmeanordnung gemäß Figur 12 in einem Betriebszustand, in dem der Aufnahmekörper vertikal unabnehmbar, aber verschiebbar, mit der Adaptervorrichtung gekoppelt angeordnet ist.
Figur 15 zeigt die Aufnahmeanordnung gemäß Figur 12 in einem Betriebszustand, in dem der Aufnahmekörper vertikal unabnehmbar und verschiebegesichert mit der Adaptervorrichtung gekoppelt angeordnet ist.
Figur 16 zeigt eine räumliche Ansicht einer Erweiterungsvorrichtung aus einer Erweiterungseinrichtung und einer Adapterplatte gemäß einem exemplarischen Ausführungsbeispiel der Erfindung.
Figur 17 zeigt die Erweiterungsvorrichtung gemäß Figur 16 in einer unterseitigen Ansicht.
Figur 18 zeigt die Erweiterungsvorrichtung gemäß Figur 16 mit einem Aufnahmekörper, der an der Adapterplatte befestigt ist.
Figur 19 zeigt die Erweiterungsvorrichtung gemäß Figur 18 mit einem weiteren Aufnahmekörper geringerer Größe und mit einer weiteren Adaptervorrichtung, wobei die weitere Adaptervorrichtung auf dem Aufnahmekörper gemäß Figur 18 befestigt und der weitere Aufnahmekörper auf der weiteren Adaptervorrichtung befestigt ist.
Figur 20 zeigt eine räumliche Ansicht einer teilweise demontierten Erweiterungseinrichtung ohne Adaptervorrichtung.

Gleiche oder ähnliche Komponenten in unterschiedlichen Figuren sind mit gleichen Bezugsziffern versehen.

Bevor bezugnehmend auf die Figuren exemplarische Ausführungsbeispiele der Erfindung beschrieben werden, sollen noch einige allgemeine Aspekte der Erfindung erläutert werden.

Gemäß einem exemplarischen Ausführungsbeispiel der Erfindung ist eine Montageeinrichtung zum Koppeln einer Adapterplatte mit einer Isofix-Schnittstelle geschaffen, wobei die Montageeinrichtung einen Basiskörper zum Aufsetzen auf einen Beifahrersitz eines Autos aufweisen kann und vorderseitig zwei Isofixanschlüsse bzw. Steckelemente aufweisen kann. Letztere können rückseitig mittels eines Zugbands an einer Steckelementaufnahme festgezogen und verklemmt werden, um die Montageeinrichtung fest an die Rückenlehne des Sitzes anzukoppeln. Optional kann zusätzlich ein U-Profil entlang der Rückenlehne verlaufend vorgesehen werden, um den Sitz während des Betriebs der Koppelvorrichtung vor Abnutzung oder Schädigung zu schützen und somit zu schonen. Der Basiskörper kann mittels einer Montagestruktur mit einer plattenförmigen Adaptervorrichtung einstückig verschraubt werden. Eine solche Adaptervorrichtung kann zum Befestigen unterschiedlich großer Aufnahmekörper bereitgestellt werden. Eine solche Adaptervorrichtung ist auf einem größeren Körper montierbar. Auf der Adaptervorrichtung ist wahlweise ein großer Koffer oder ein kleiner Koffer oder ein anderer Aufnahmekörper durch Aufschieben und Verriegeln mittels verschiebbarer Verriegelungselemente an der Adaptervorrichtung montierbar. Ebenso kann es möglich sein, auf der Adaptervorrichtung wahlweise den großen Koffer oder den kleinen Koffer oder einen anderen Aufnahmekörper durch Aufsetzen zu stapeln, wofür Verriegelungselemente in eine Stellung gebracht werden können, dass diese formschlüssig Stapelfüße des Koffers aufnehmen können.

Eine Adaptervorrichtung gemäß einem exemplarischen Ausführungsbeispiel der Erfindung kann zur Verbindung unterschiedlich großer Koffer eingesetzt werden. Ein jeweiliger Koffer kann auch zwischen zwei hintereinander angeordnete Adaptervorrichtungen geschoben werden. Die Adaptervorrichtung kann mit einem Tragegriff zum Tragen versehen und an einer Wand befestigbar sein. Befestigungsöffnungen oder sonstige Befestigungsstrukturen zum Befestigen der Adaptervorrichtung an einer Wand können dieselben sein, mit denen die Adaptervorrichtung auch an einem Basiskörper verschraubt werden kann. Die Adaptervorrichtung kann mit Stahlversteifungen versehen sein, um die Steifigkeit der Adaptervorrichtung zu erhöhen. Ferner können zum Beispiel pilzförmige Überstände an der Adaptervorrichtung vorgesehen sein, die zum Ineingriffnehmen von invers geformten Nuten an einer anderen, gleichartigen Adaptervorrichtung eingerichtet sein können. Auf diese Weise können mehrere Adaptervorrichtungen aneinander gesetzt werden.

Eine Montageeinrichtung mit Basiskörper zum Aufnehmen einer Adaptervorrichtung erlaubt eine Kopplung der Adaptervorrichtung mit Isofix-Befestigungsmitteln. Eine Befestigung einer solchen Montageeinrichtung in einem Kraftfahrzeug, insbesondere an einem Kraftfahrzeugsitz, kann über einen Sicherheitsgurt und/oder über die Isofix-Verbindungsmittel erfolgen. Der Basiskörper kann höhenverstellbar vorgesehen sein, damit zum Beispiel bei schrägen Sitzflächen eine horizontale Arbeitsfläche eingestellt werden kann. Dies kann zum Beispiel durch ein Raster von Löchern auf verschiedenen Höhen realisiert werden, in die ein Fixierbolzen oder dergleichen eingeführt werden kann, sodass eine Platte bzw. die Adaptervorrichtung an verschiedenen Höhenpositionen einrastbar ist. Aufgrund eines symmetrischen Aufbaus der Adaptervorrichtung ist es möglich, diese mittels der Montageeinrichtung auf einem beliebigen Sitz im Kraftfahrzeug, insbesondere einem Vordersitz oder einem Rücksitz, zu montieren.

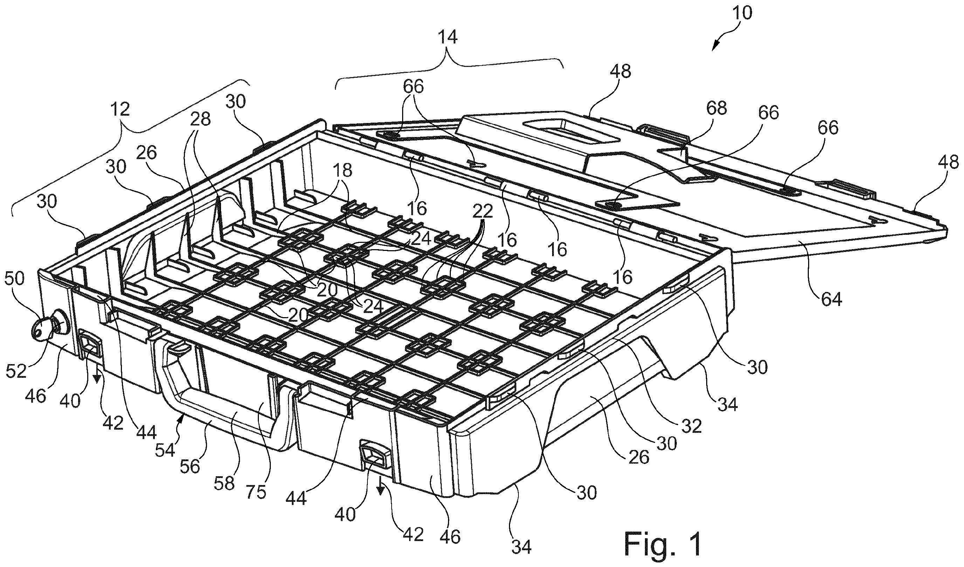

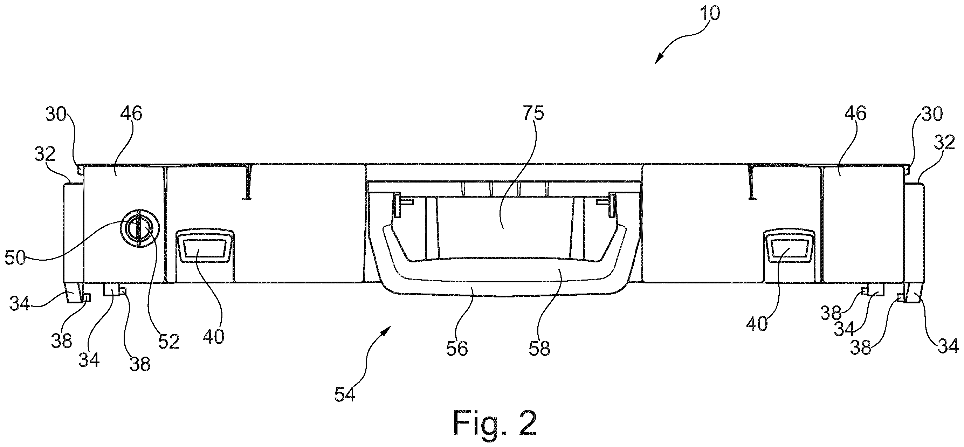

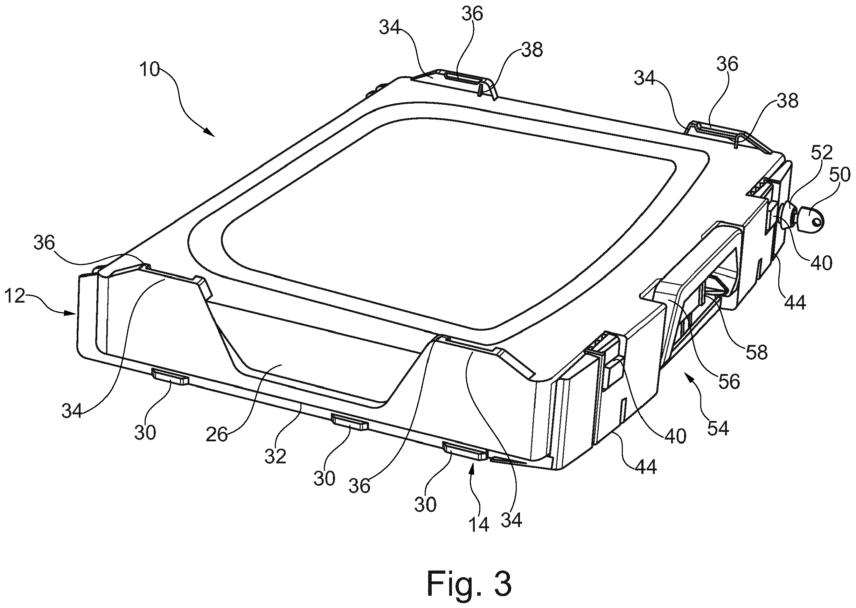

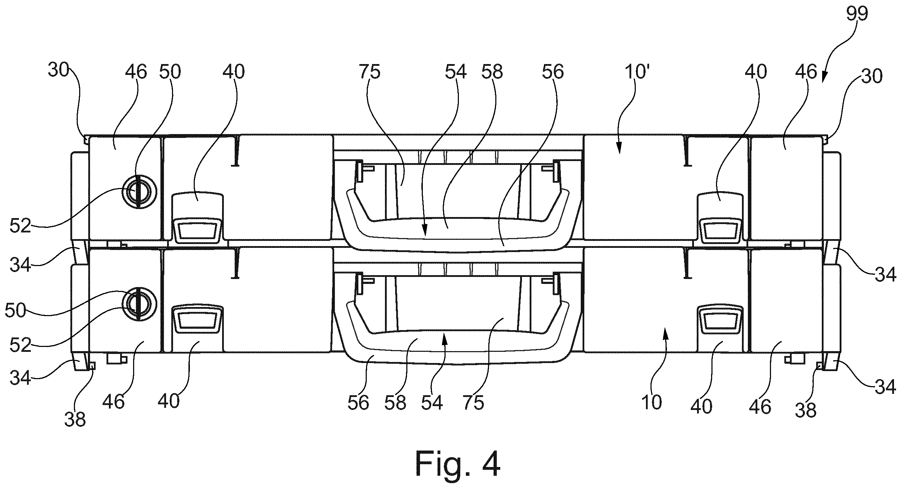

**Figur 1** zeigt einen als Koffer ausgebildeten Aufnahmekörper 10 gemäß einem exemplarischen Ausführungsbeispiel der Erfindung in einem Öffnungszustand. **Figur 2** und **Figur 3** zeigen den Aufnahmekörper 10 gemäß Figur 1 in einem geschlossenen Zustand bzw. Schließzustand. **Figur 4** zeigt einen Aufnahmekörper 10, wie er in Figur 1 bis Figur 3 dargestellt ist, in einem mit einem anderen gleichartigen, als Koffer ausgebildeten Aufnahmekörper 10' gekoppelten Zustand. Figur 4 zeigt somit eine Anordnung 99, die den Aufnahmekörper 10 und den zusätzlichen gleichartigen Aufnahmekörper 10' in einem Verbindungszustand zeigt.

Der Aufnahmekörper 10 dient zum Transportieren von Transportgut. Solches Transportgut kann lose oder befestigt bzw. gesichert im Inneren des Aufnahmekörpers 10 aufgenommen sein und kann insbesondere in Aufnahmebehältern (nicht gezeigt) aufgenommen sein, die wiederum im geschlossenen Zustand des Aufnahmekörpers 10 in dessen Inneren sicher untergebracht sind. Beispiele für derartiges Transportgut sind Verbrauchsmaterialien (wie Schrauben, Nägel, Dübel, Schüttgut oder Flüssigkeiten) oder Werkzeuge (wie zum Beispiel Schraubendreher oder Bits), etc.

Der Aufnahmekörper 10 weist einen Korpus 12 und einen mit dem Korpus 12 verbundenen oder verbindbaren Deckel 14 auf. An den Innenseiten des Korpus 12 sind Verstärkungsrippen 28 zum mechanischen Verstärken des Aufnahmekörpers 10 gebildet. Diverse Kopplungsstrukturen 30, 32, 34, 36, 38, 40, 44 sind gemäß dem gezeigten Ausführungsbeispiel ausschließlich an dem Korpus 12, nicht hingegen an dem Deckel 14 angebracht. In dem Schließzustand zwischen dem Korpus 12 und dem Deckel 14 ist ein Aufnahmeraum zum Aufnehmen von Transportgut von außen unzugänglich zwischen dem Korpus 12 und dem Deckel 14 eingeschlossen. In dem Öffnungszustand ist der Aufnahmeraum von außen zugänglich, zum Beispiel um Transportgut aus dem Aufnahmekörper 10 zu entnehmen oder in den Aufnahmekörper 10 einzubringen.

Die Kopplungsstrukturen 30, 32, 34, 36, 38, 40, 44 sind derart ausgebildet, dass der Aufnahmekörper 10 und der identische andere Aufnahmekörper 10' mittels der Kopplungsstrukturen 30, 32, 34, 36, 38, 40, 44 (die somit in identischer Weise auch an dem anderen Aufnahmekörper 10' vorgesehen sind) wahlweise übereinander vertikal abnehmbar und horizontal verschiebegesichert stapelbar sind (Zustand I), oder vertikal unabnehmbar und horizontal verschiebbar miteinander koppelbar sind (Zustand II). Ferner können die Aufnahmekörper 10, 10' vertikal unabnehmbar und horizontal unverschiebbar miteinander gekoppelt sein (Zustand III). Die Kopplungsstrukturen 30, 32, 34, 36, 38, 40, 44, die sowohl das Stapeln (Zustand I) als auch das Koppeln (Zustand II, Zustand III) der mehreren Aufnahmekörper 10, 10' bewerkstelligen, sind ausschließlich mittels Vorkehrungen an dem jeweiligen Korpus 12 (siehe Rastnocken 30 und Aufnahmenuten 36 von Rastfüßen 34, Koppelnasen 38 an den Rastfüßen 34, eine Führungsschiene 30, 32 zwischen den Rastnocken 30 und Stufen 32 sowie miteinander zusammenwirkende Rastschieber 40 und Aufnahmenuten 44) realisiert, ohne dass hierfür aber Vorkehrungen an dem Deckel 14 getroffen sind.

Um den Zustand I zu aktivieren, wird der andere Aufnahmekörper 10' vertikal über dem Aufnahmekörper 10 angeordnet und nachfolgend so auf den Aufnahmekörper 10 abgesenkt, dass die Aufnahmenuten 36 an den Rastfüßen 34 des anderen Aufnahmekörpers 10' in Eingriff mit den Rastnocken 30 des Aufnahmekörpers 10 geraten. Die Aufnahmenuten 36 an den Rastfüßen 34 des anderen Aufnahmekörpers 10' sowie die Rastnocken 30 des Aufnahmekörpers 10 sorgen dann dafür, dass der andere Aufnahmekörper 10' jederzeit wieder vertikal von dem Aufnahmekörper 10 abgehoben werden kann (das heißt durch eine zur Stapelbewegung inverse Bewegung), aber durch den Formschluss zwischen den Aufnahmenuten 36 an den Rastfüßen 34 des anderen Aufnahmekörpers 10' und den Rastnocken 30 des Aufnahmekörpers 10 vor einer Verschiebbarkeit in horizontaler Ebene geschützt ist.

Um den Zustand II zu aktivieren, wird der andere Aufnahmekörper 10' in der Horizontalebene vor dem Aufnahmekörper 10 angeordnet und vertikal leicht gegenüber dem Aufnahmekörper 10 angehoben, so dass die Kopplungsnasen 38 des anderen Aufnahmekörpers 10' auf Höhe zwischen den Rastnocken 30 und den Stufen 32, mithin auf Höhe der Führungsschienen 30, 32 des Aufnahmekörpers 10 angeordnet sind. Dann wird die Aktivierung des Zustands II abgeschlossen, indem der andere Aufnahmekörper 10' so über den Aufnahmekörper 10 aufgeschoben wird, dass die Koppelnasen 38 des anderen Aufnahmekörpers 10' zwischen die Rastnocken 30 und die Stufen 32, mithin in die Führungsschienen 30, 32 des Aufnahmekörpers 10 einfahren. In dem Zustand II ist ein Abheben des anderen Aufnahmekörpers 10' von dem Aufnahmekörper 10 aufgrund des Formschlusses zwischen den Koppelnasen 38 einerseits und den Rastnocken 30 bzw. den Stufen 32, daher mit dem Führungsschienen 30, 32 andererseits, verunmöglicht. Gleichzeitig ist ein Trennen des Aufnahmekörpers 10 von dem anderen Aufnahmekörper 10' durch ein horizontales Abschieben des anderen Aufnahmekörpers 10' von dem Aufnahmekörper 10 möglich, nämlich mit einer inversen Verschiebebewegung im Vergleich zu jener, mit der der Zustand II abgeschlossen wurde.

Um ausgehend von dem Zustand II den Zustand III zu aktivieren, werden im aufeinander aufgeschobenen Zustand der Aufnahmekörper 10, 10' durch eine vertikale Verschiebebewegung die Rastschieber 40 des anderen Aufnahmekörpers 10' in die Aufnahmenuten 44 des Aufnahmekörpers 10' eingeführt. In dem dadurch abgeschlossenen Zustand III ist nun auch eine Verschiebesicherung zwischen den Aufnahmekörpern 10, 10' ausgebildet, sodass nun weder ein vertikales Abheben noch ein horizontales Abschieben der Aufnahmekörper 10, 10' voneinander möglich ist.

Ein Teil der Kopplungsstrukturen 30, 32, 34, 36, 38, 40, 44 (nämlich die Kopplungsstrukturen mit den Bezugszeichen 30, 34 mit 38) tragen sowohl zum vertikal abnehmbar verschiebegesicherten Stapeln als auch zum vertikal unabnehmbar miteinander Koppeln bei.

Wie bereits beschrieben, sind die Kopplungsstrukturen 30, 32, 34, 36, 38, 40, 44 ausgebildet, dass der Aufnahmekörper 10 und der andere Aufnahmekörper 10' mittels der Kopplungsstrukturen 30, 32, 34, 36, 38, 40, 44 in dem übereinander vertikal unabnehmbar miteinander gekoppelten Zustand selektiv gegeneinander verschiebbar (Zustand II, in dem Kopplungsstrukturen 40, 44 miteinander nicht in Eingriff sind) oder mittels Betätigens der Kopplungsstrukturen 30, 32, 34, 36, 38, 40, 44 gegeneinander verschiebesicherbar sind (Zustand III, in dem zusätzlich Kopplungsstrukturen 40, 44 miteinander in Eingriff sind). Ein Teil der Kopplungsstrukturen 30, 32, 34, 36, 38, 40, 44 (nämlich die Kopplungsstrukturen mit den Bezugszeichen 40 und 44), der in dem übereinander vertikal unabnehmbar miteinander verschiebegesichert gekoppelten Zustand III zum Verschiebesichern beiträgt, ist unabhängig von einem anderen Teil (nämlich den Kopplungsstrukturen mit den Bezugszeichen 30, 32, 34, 36, 38) der Kopplungsstrukturen 30, 32, 34, 36, 38, 40, 44 ausgebildet und betätigbar, der zum vertikal abnehmbar verschiebegesicherten Stapeln bzw. zum vertikal unabnehmbar miteinander Koppeln beiträgt (Zustand I bzw. Zustand II).

Der Teil der Kopplungsstrukturen 30, 32, 34, 36, 38, 40, 44, mit dem der Aufnahmekörper 10 und der andere Aufnahmekörper 10' übereinander vertikal abnehmbar verschiebegesichert stapelbar sind, ist in Form der Rastnocken 30 an äußeren oberseitigen Kantenbereichen des Korpus 12 sowie in Form der Rastfüße 34 mit mit den Rastnocken 30 im gestapelten Zustand zusammenwirkenden unterseitigen Aufnahmenuten 36 an äußeren unterseitigen Kantenbereichen des Korpus 12 ausgebildet.

Der Teil der Kopplungsstrukturen 30, 32, 34, 36, 38, 40, 44, mit dem der Aufnahmekörper 10 und der andere Aufnahmekörper 10' übereinander vertikal unabnehmbar miteinander koppelbar sind, ist in Form der Führungsschienen 30, 32 an äußeren oberseitigen Kantenbereichen des Korpus 12 sowie in Form der mit den Führungsschienen 30, 32 im gekoppelten Zustand zusammenwirkenden unterseitigen Koppelnasen 38 an äußeren unterseitigen Kantenbereichen des Korpus 12 ausgebildet. Dabei bilden die Rastnocken 30 einen Teil der Führungsschienen 30, 32 und bilden die Koppelnasen 38 Teil der Rastfüße 34. Die Rastfüße 34 erstrecken sich vertikal über eine Bodenfläche des Korpus 12 hinaus nach unten (siehe Figur 2), sodass der Aufnahmekörper 10 mit den Rastfüßen 34 auf einem Untergrund abstellbar ist.

Der Teil der Kopplungsstrukturen 30, 32, 34, 36, 38, 40, 44, mit dem der Aufnahmekörper 10 und der andere Aufnahmekörper 10' in dem übereinander vertikal unabnehmbar miteinander gekoppelten Zustand gegeneinander verschiebesicherbar sind (Zustand III), ist in Form der Aufnahmenuten 44 und der damit zusammenwirkenden Rastschieber 40 ausgebildet. Wie mit einem Pfeil 42 in Figur 1 angedeutet, sind die Rastschieber 40 an dem Korpus 12 des anderen Aufnahmekörpers 10' in die Aufnahmenuten 44 an dem Korpus 12 des Aufnahmekörpers 10 einschiebbar (wenn der andere Aufnahmekörper 10' oberhalb des Aufnahmekörpers 10 angeordnet wird, wie in Figur 4), oder umgekehrt (wenn der Aufnahmekörper 10 oberhalb des anderen Aufnahmekörpers 10' angeordnet wird).

Alle Kopplungsstrukturen 30, 32, 34, 36, 38, 40, 44 sind an Seitenflächen des Korpus 12 vorgesehen (siehe zum Beispiel Figur 1). Im Gegensatz dazu ist der Deckel 14 von den Kopplungsstrukturen 30, 32, 34, 36, 38, 40, 44 frei.

Der Aufnahmekörper 10 weist ferner Griffmulden 26 in Form von Vertiefungen an einander gegenüberliegenden Seitenflächen des Korpus 12 auf.

Darüber hinaus kann eine optionale Abschließeinrichtung 46, 48, 50, 52 zum Verschließen des Deckels 14 an dem Korpus 12 in dem Schließzustand vorgesehen sein. In dem Schließzustand des Aufnahmekörpers 10 kann mittels eines Schlüssels 50 in einem Drehschloss 52 in einem Aufnahmeelement 46 des Korpus 12 eine Verriegelung mit einem Gegenstück 48 des Deckels 14 bewerkstelligt werden. Wenn der Deckel 14 mittels eines Scharniers 16 umgeschwenkt wird, um das Innere des Korpus 12 zu verschließen, so verrasten Verschlusselemente des Drehschlosses 52 an dem Korpus 12 mit dem Gegenstück 48 an dem Deckel 14. Das mittels des abziehbaren Schlüssels 50 betätigbare Drehschloss 52 an dem Korpus 12 enthält einen Schwenkbügel, der in dem Gegenstück 48 an dem Deckel 14 einfährt.

Ein Griff 54 ist in einer Mulde an einer im Tragezustand oberen Seitenfläche des Korpus 12 angebracht und zwischen einem an der Seitenfläche des Korpus 12 angeklappten Zustand (siehe Figur 1) und einem von der Seitenfläche abgeklappten Zustand verkippbar. Einen Übergang zwischen diesen beiden Zuständen kann der Benutzer durch Handhabung des Griffs 54 herbeiführen. Der Griff 54 ist aus einer Hartkomponente 56 zum Stabilisieren und Lagern des Griffs 54 und einer Weichkomponente 58 zum bequemen Berühren des Aufnahmekörpers 10 durch einen Benutzer beim Tragen des Aufnahmekörpers 10 ausgebildet. Der Griff 54 an dem Korpus 12 kann an Letzteren angelegt werden und verbleibt dort in kompakter Stellung durch die Wirkung einer den Griff 54 im eingezogenen Zustand verrastenden Rastnocke. Im Bereich des Griffs 54 ist ein Etikettenfeld 75 vorgesehen, in das ein zum Beispiel für den Inhalt des Aufnahmekörpers 10 indikativer Kennzeichnungsträger einschiebbar ist.

Der Aufnahmekörper 10 weist darüber hinaus das Scharnier 16 auf, das den Korpus 12 und den Deckel 14 klappbar miteinander verbindet und ausgebildet ist, den Aufnahmekörper 10 zwischen dem Schließzustand und dem Öffnungszustand umklappen zu können. Die Rastfüße 34 und das Scharnier 16 sind strukturell derart aufeinander angepasst und positioniert, dass das Scharnier 16 berührungsfrei gegenüber dem Untergrund beabstandet verbleibt, wenn der Aufnahmekörper 10 mittels der Rastfüße 34 auf dem Untergrund aufliegt.

Wie in Figur 1 erkennbar ist, ist an einer Innenseite des Deckels 14 ein Dokumentenhalter 68 angebracht, mit dem in Figur 1 nicht gezeigte Dokumente vorübergehend angeklemmt und somit während des Transports befestigt werden können.

Sowohl der Korpus 12 als auch der Deckel 14 sind jeweils herstellungstechnisch einfach als Spritzgussteil ausgebildet. An das jeweilige Spritzgussteil sind nachfolgend weitere Komponenten angebracht (zum Beispiel der Rastschieber 40 an dem Korpus 12 oder der Dokumentenhalter 68 an den Deckel 14).

Die Aufnahmekörper 10, 10' sind auch zum Aufnehmen von Sortimentboxen (nicht gezeigt) ausgebildet, in denen zum Beispiel Werkzeugmaterialien wie Schrauben, Dübel oder anderes aufgenommen werden können. Im Schließzustand des jeweiligen Aufnahmekörpers 10, 10' sind die Sortimentboxen für einen Benutzer unzugänglich im Inneren des jeweiligen Aufnahmekörpers 10, 10' gesichert, wohingegen ein Benutzer im Öffnungszustand des jeweiligen Aufnahmekörpers 10, 10 auf die Sortimentboxen zugreifen kann.

Wie in Figur 1 und Figur 2 gezeigt, stehen an einer Innenseite des Korpus 12 sich kreuzförmig schneidende Längsstreben 18 und Querstreben 20 erhaben über einer ebenen Unterlage hervor. In Schnittbereichen der Längsstreben 18 und der Querstreben 20 sind zusätzlich erhaben überstehende Rahmen 22 gebildet, die in jedem Schnittbereich gemeinsam mit Längsstreben 18 und Querstreben 20 vier Aufnahmevertiefungen 24 zum Aufnehmen von im Wesentlichen invers zu den Aufnahmevertiefungen 24 geformten Füßen von Sortimentboxen bilden.

Eine ringförmige Vertiefung an einer Innenseite des Deckels 14 ist mit einem ringförmigen Passepartout 64 bedeckt, das umfänglich an dem Deckel 14 ultraschallverschweißt ist. An dem Passepartout 64 ist mittels Kunststoffclips 66 der aus Kunststoff gebildete Dokumentenhalter 68 zum Klemmbefestigen von nicht gezeigten Dokumenten angebracht.

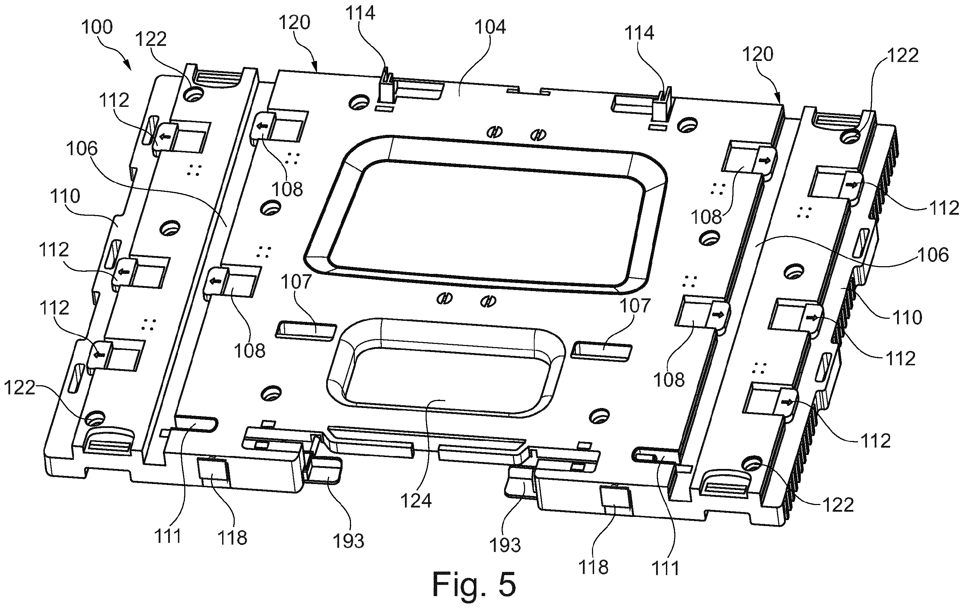

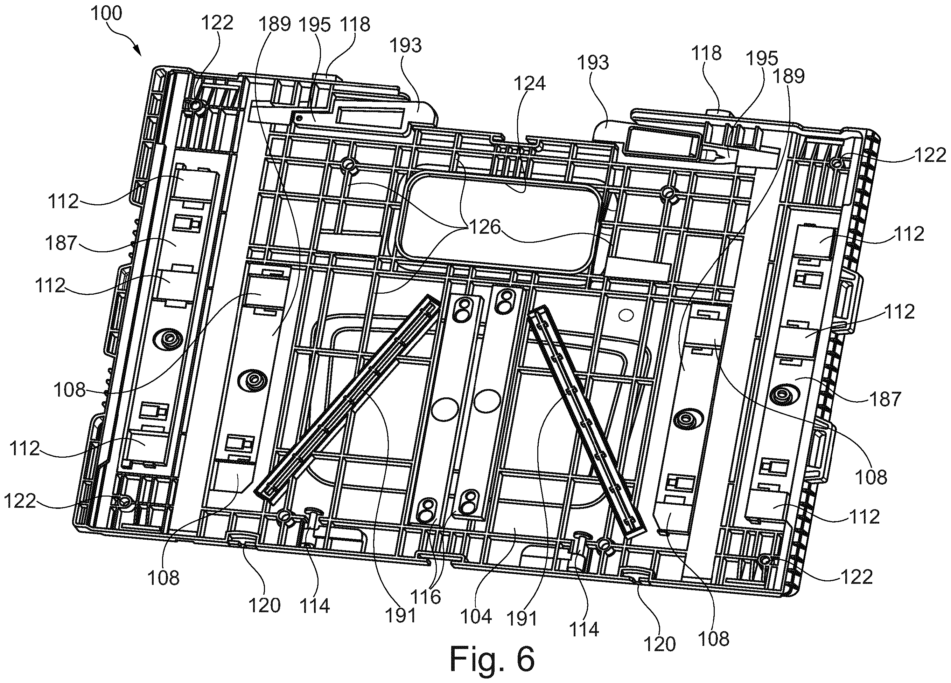

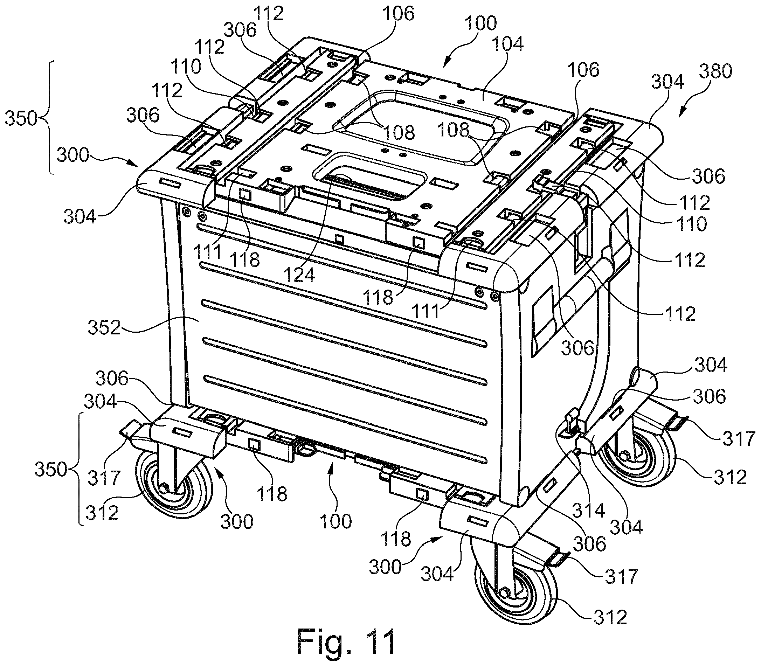

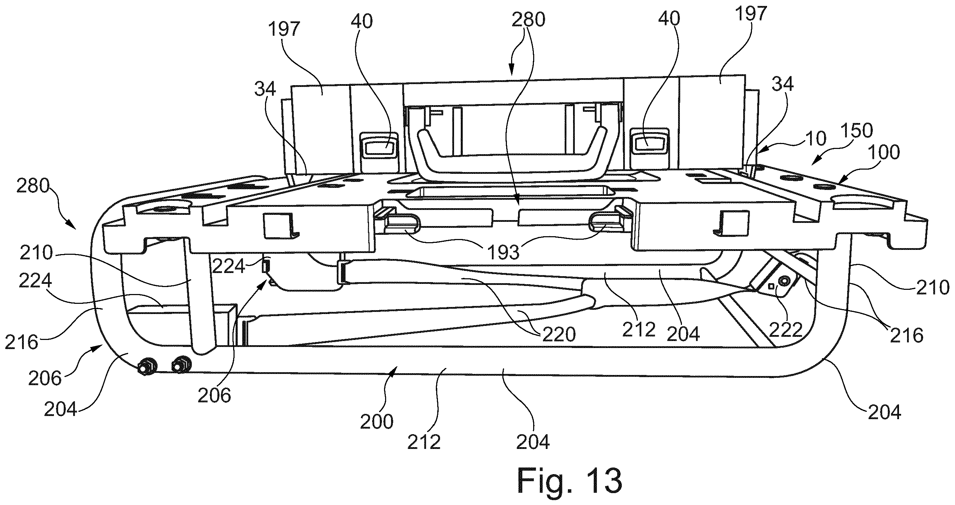

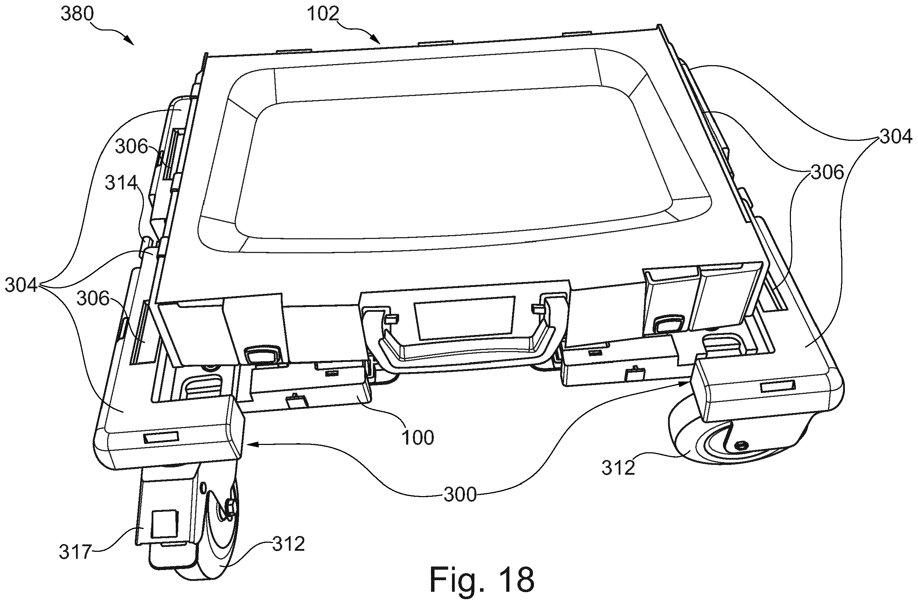

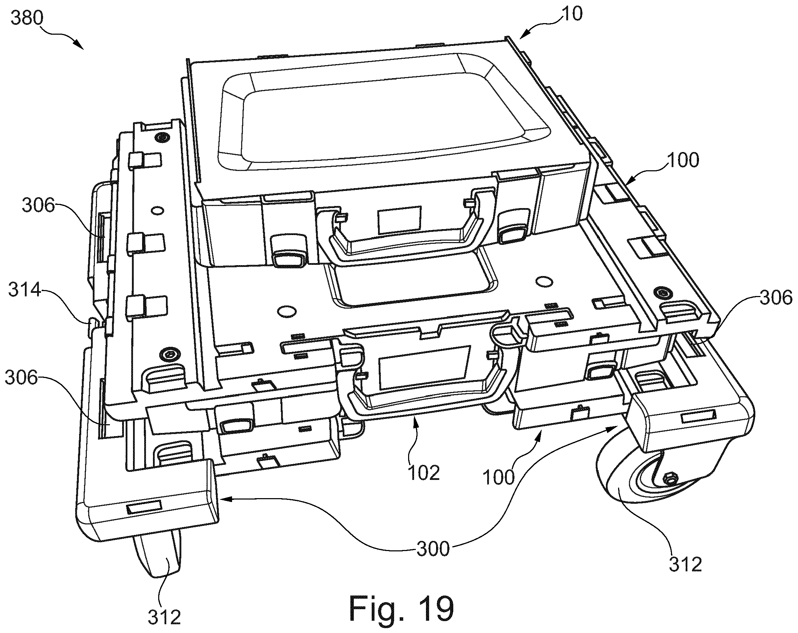

**Figur 5** zeigt eine Oberseite und **Figur 6** zeigt eine Unterseite einer plattenförmigen Adaptervorrichtung 100 gemäß einem exemplarischen Ausführungsbeispiel der Erfindung. Während zwei gleichartige und gleichgroße Aufnahmekörper 10, 10' direkt aneinander befestigt werden können (vergleiche Figur 4), erlaubt es die Adaptervorrichtung 100, zum Beispiel als Koffer ausgebildete unterschiedlich große Aufnahmekörper 10, 102 (siehe zum Beispiel Figur 13, Figur 18) befestigend aufzunehmen, zum Befestigen eines als Aufbewahrungsbox ausgebildeten Aufnahmekörpers 352 (siehe zum Beispiel Figur 11) beizutragen oder auch zwischen zwei unterschiedlich großen Aufnahmekörpern 10, 102 (siehe zum Beispiel Figur 19) als eine Befestigung herstellendes Zwischenstück zu fungieren. Es ist es auch möglich, zwei gleich große Aufnahmekörper 10, 102 (zum Beispiel Koffer) aneinander zu befestigen.

Die Adaptervorrichtung 100 weist hierfür eine als Trägerplatte aus Kunststoff ausgebildete Trägereinrichtung 104 zum Tragen eines befestigten Aufnahmekörpers 10, 102 auf. Ferner enthält die Adaptervorrichtung 100 erste Kopplungsstrukturen 106 bis 108 an der Trägereinrichtung 104, die zum Befestigen eines ersten Aufnahmekörpers 10 einer ersten Größe mittels Aufschiebens und Verriegelns an den ersten Kopplungsstrukturen 106 bis 108 ausgebildet sind (siehe zum Beispiel Figur 13). Des Weiteren weist die Adaptervorrichtung 100 zweite Kopplungsstrukturen 110 bis 112 an der Trägereinrichtung 104 auf, die zum Befestigen eines zweiten Aufnahmekörpers 102 einer (im Vergleich zu der ersten Größe größeren) zweiten Größe mittels Aufschiebens und Verriegelns an den zweiten Kopplungsstrukturen 108 bis 110 ausgebildet sind (siehe zum Beispiel Figur 18).

Die ersten Kopplungsstrukturen 106 bis 108 enthalten zwei zueinander parallele und in einem ersten Abstand voneinander beabstandete erste Führungsschienen 106. Wie in Figur 13 gezeigt, kann entlang der beiden ersten Führungsschienen 106 der erste Aufnahmekörper 10 bis zu einer ersten Verriegelungsposition aufgeschoben werden, wobei die Rastfüße 34 des ersten Aufnahmekörpers 10 entlang der ersten Führungsschienen 106 gleiten. Entsprechend weisen die zweiten Kopplungsstrukturen 110 bis 112 zwei zueinander parallele und gegenüber dem ersten Abstand mit einem größeren zweiten Abstand voneinander beabstandete zweite Führungsschienen 110 auf, welche die ersten Führungsschienen 106 seitlich umgeben. Wie in Figur 18 gezeigt, kann entlang der zweiten Führungsschienen 110 der (im Vergleich zu dem ersten Aufnahmekörper 10 größere) zweite Aufnahmekörper 102 bis zu einer zweiten Verriegelungsposition auf die Trägereinrichtung 104 aufgeschoben werden, wobei die Rastfüße 34 des zweiten Aufnahmekörpers 102 entlang der zweiten Führungsschienen 110 gleiten.

Darüber hinaus enthalten die ersten Kopplungsstrukturen 106 bis 108 jeweils zwei entlang der jeweiligen ersten Führungsschiene 106 beabstandete erste Verriegelungskörper 108. Entsprechend enthalten die zweiten Kopplungsstrukturen 110 bis 112 jeweils drei entlang der jeweiligen zweiten Führungsschiene 110 beabstandete zweite Verriegelungskörper 112.

In der in Figur 5 gezeigten Stellung der Verriegelungskörper 108, 112, kann ein jeweiliger Aufnahmekörper 10, 102 auf die Adaptervorrichtung 100 durch vertikales Absenken aufgesetzt werden, wodurch die jeweiligen Verriegelungskörper 108, 112 in die Aufnahmenuten 36 an den Rastfüßen 34 des jeweiligen Aufnahmekörpers 10, 102 eintauchen und dabei einen vertikal abnehmbar verschiebegesicherten Zustand 1 (in Analogie zu dem obigen Zustand I zwischen zwei gleichartigen Aufnahmekörpern 10, 10') einnehmen. Anders ausgedrückt fungieren die jeweiligen Verriegelungskörper 108, 11 2 in Zustand 1 ähnlich wie die Rastnocken 30 der Aufnahmekörper 10, 10' in Zustand I.

Bei Aufschieben des ersten Aufnahmekörpers 10 entlang der beiden ersten Führungsschienen 106 bis zu der ersten Verriegelungsposition (die durch eine unten näher beschriebene Anschlagstruktur 114 intuitiv angezeigt sein kann, an die eine Seitenfläche des ersten Aufnahmekörpers 10 beim Aufschieben anschlagen kann, wenn die erste Verriegelungsposition erreicht ist) bewirken die beiden Paare von ersten Verriegelungskörpern 108 hingegen ein vertikal unabnehmbares Verriegeln des ersten Aufnahmekörpers 10 an der Adaptervorrichtung 100 (wobei diese Position in Analogie zu dem obigen Zustand II als Zustand 2 bezeichnet werden kann). Bei Aufschieben des zweiten Aufnahmekörpers 102 entlang der beiden zweiten Führungsschienen 110 bis zu der zweiten Verriegelungsposition (die wiederum durch die unten näher beschriebene Anschlagstruktur 114 definiert ist) wird der zweite Aufnahmekörper 102 an der zweiten Verriegelungsposition durch die zweiten Verriegelungskörper 112 vertikal unabnehmbar an der Adaptervorrichtung 100 verriegelt (Zustand 2 des zweiten Aufnahmekörpers 102).

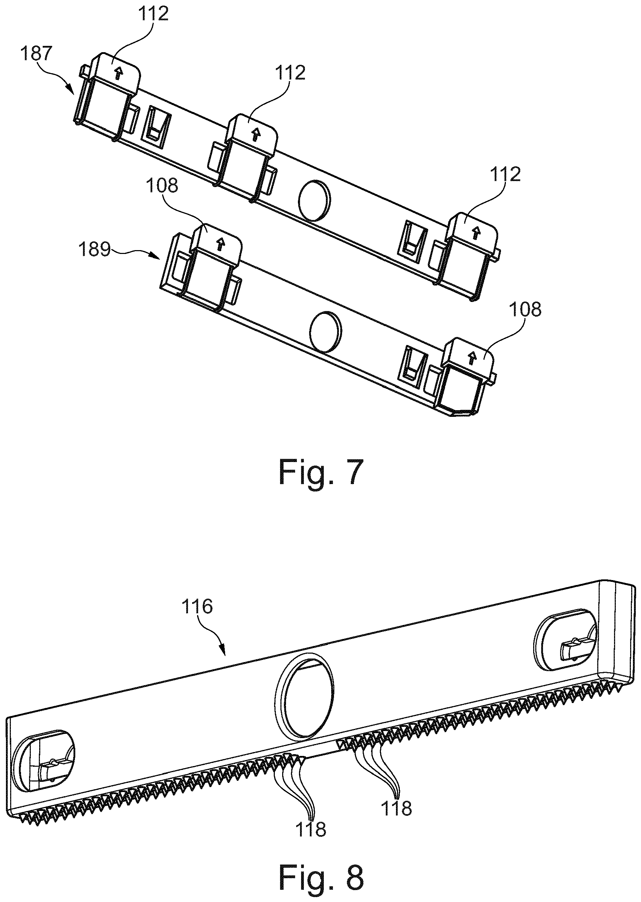

Wie mit Pfeilen auf den jeweiligen Verriegelungskörpern 108, 112 in Figur 5 angedeutet, sind die ersten und zweiten Verriegelungskörper 108, 112 zum Verriegeln des jeweiligen Aufnahmekörpers 10, 102 zuvor senkrecht zu den Erstreckungsrichtungen der Führungsschienen 106, 110 verschiebbar und zum Einnehmen einer Verriegelungsposition in eine jeweilige Führungsschiene 106, 110 - unter Freilassung eines vertikalen Zwischenraums zwischen dem jeweiligen Verriegelungskörper 108, 112 und der jeweiligen Führungsschiene 106, 110 zum Aufnehmen eines jeweiligen Rastfußes 34 des jeweiligen Aufnahmekörpers 10, 102 - hinein verschiebbar. In Figur 5 sind die Verriegelungskörper 108, 112 alle in die jeweils zugehörige Führungsschiene 106, 110 hineinragend verschoben und in dieser Position verrastet worden. Um zum Beispiel zum Durchschieben eines Aufnahmekörpers 10, 102 entlang fluchtender Führungsschienen 106, 110 zwischen mehreren aneinander angestückten Adaptervorrichtungen 100 die Führungsschienen 106, 110 vollständig freizuhalten, können die Verriegelungskörper 108, 112 durch eine Bewegung entgegen der angezeigten Pfeilrichtung auch vollständig aus den Führungsschienen 106, 110 herausgefahren werden. Wie in Figur 6 und **Figur 7** zu erkennen ist, sind jeweilige Sätze von Verriegelungskörpern 108 bzw. 112 an gemeinsamen Trägerbalken 187, 189 starr bzw. als integraler Teil davon vorgesehen, sodass die Trägerbalken 187, 189 zwischen einer äußeren Rastposition (durch Einfahren der jeweiligen Verriegelungskörper 108, 112 in die jeweiligen Führungsschienen 106, 110, um die Adaptervorrichtung 100 in eine verriegelungsfähige Position zu bringen) und einer inneren Rastposition (durch Herausfahren der jeweiligen Verriegelungskörper 108, 112 aus der jeweiligen Führungsschiene 106, 110, um die Führungsschienen 106, 110 vollständig freizuhalten) verschoben werden können.

Die beschriebene Konfiguration der ersten Kopplungsstrukturen 106 bis 108 und der zweiten Kopplungsstrukturen 110 bis 112 erlaubt es, dass wahlweise nur der erste Aufnahmekörper 10 oder nur der zweite Aufnahmekörper 102 mittels der Kopplungsstrukturen 106 bis 108, 110 bis 112 auf der Adaptervorrichtung 100 entweder in einen vertikal abnehmbar verschiebegesichert stapelbaren Zustand (Zustand 1) überführbar ist oder mittels des Aufschiebens und des Verriegelns an den ersten Kopplungsstrukturen 106 bis 108 oder den zweiten Kopplungsstrukturen 110 bis 112 in einen vertikal unabnehmbar miteinander koppelbaren Zustand (Zustand 2) überführbar sind:

Wenn der in Figur 1 bis Figur 4 gezeigte Aufnahmekörper 10 durch vertikales Absenken auf die Adaptervorrichtung 100 in der Position der Verriegelungskörper 108, 112 gemäß Figur 5 aufgesetzt wird, geraten die Aufnahmenuten 36 an den Rastfüßen 34 des Aufnahmekörpers 10 (vergleiche Figur 3) in Eingriff mit vertikalen Überständen der ersten Verriegelungskörper 108 der Adaptervorrichtung 100, die gemäß Figur 5 teilweise in die ersten Führungsschienen 106 eingefahren sind. Die Aufnahmenuten 36 an den Rastfüßen 34 des Aufnahmekörpers 10 sowie die Überstände der ersten Verriegelungskörper 108 der Adaptervorrichtung 100 sorgen dann dafür, dass der Aufnahmekörper 10 jederzeit wieder vertikal von der Adaptervorrichtung 100 abgehoben werden kann (das heißt durch eine zur Stapelbewegung inverse Bewegung), aber durch den Formschluss zwischen den Aufnahmenuten 36 an den Rastfüßen 34 des Aufnahmekörpers 10 und den Überständen der ersten Verriegelungskörper 108 vor einer Verschiebbarkeit in horizontaler Ebene geschützt ist (Zustand 1).

Um stattdessen den vertikal unabnehmbar miteinander gekoppelten Zustand 2 zu aktivieren, kann der Aufnahmekörper 10 (zum Beispiel gegenüber der Horizontalebene leicht verkippt) vor die Adaptervorrichtung 100 gemäß Figur 5 angeordnet werden, so dass die vorderseitigen Koppelnasen 38 des Aufnahmekörpers 10 in den ersten Führungsschienen 106 zwischen den jeweils vorderseitigen ersten Verriegelungskörpern 108 und den jeweils rückseitigen ersten Verriegelungskörpern 108 der Adaptervorrichtung 100 angeordnet sind. Dann wird die Aktivierung des vertikal unabnehmbar miteinander gekoppelten Zustands 2 abgeschlossen, indem der Aufnahmekörper 10 vollständig in die horizontale Ebene abgesenkt wird, so dass auch die rückseitigen Koppelnasen 38 des Aufnahmekörpers 10 in die ersten Führungsschienen 106 eintauchen. Nachfolgend wird der so positionierte Aufnahmekörper 10 entlang der ersten Führungsschienen 106 so weit verschoben, bis sowohl die vorderseitigen Koppelnasen 38 als auch die rückseitigen Koppelnasen 38 unterhalb der jeweiligen ersten Verriegelungskörper 108 positioniert sind. In diesem Zustand 2 ist ein Abheben des Aufnahmekörpers 10 von der Adaptervorrichtung 100 aufgrund des Formschlusses zwischen den Koppelnasen 38 einerseits und den ersten Verriegelungskörpern 108 bzw. den ersten Führungsschienen 106 andererseits verunmöglicht. Gleichzeitig ist ein Trennen des Aufnahmekörpers 10 von der Adaptervorrichtung 100 durch ein horizontales Abschieben des Aufnahmekörpers 10 von der Adaptervorrichtung 100 möglich, nämlich mit einer inversen Verschiebebewegung im Vergleich zu jener, mit der der vertikal unabnehmbar miteinander gekoppelte Zustand 2 aktiviert wurde.

Die ersten Kopplungsstrukturen 106 bis 108 enthalten ferner eine erste Zusatzverriegelungseinrichtung 107 in Form von Aufnahmenuten in der Trägereinrichtung 104 zum zusätzlichen verschiebegesicherten Verriegeln des ersten Aufnahmekörpers 10, wenn dieser an der Trägereinrichtung 104 aufgeschoben und verriegelt ist und somit in Zustand 2 befindlich ist. Wenn die Koppelnasen 38 des ersten Aufnahmekörpers 10 unterhalb der Überstände der ersten Verriegelungskörper 108 angeordnet sind, ist immer noch ein lineares Verschieben des ersten Aufnahmekörpers 10 entlang der ersten Führungsschienen 106 möglich. Um ausgehend von diesem nicht verschiebegesicherten Zustand 2 einen verschiebegesicherten Zustand 3 (in Analogie zu dem oben beschriebenen verschiebegesicherten Zustand III zwischen den gleichartigen Aufnahmekörpern 10, 10') zu aktivieren, werden im aufeinander aufgeschobenen Zustand 2 des ersten Aufnahmekörpers 10 und der Adaptervorrichtung 100 durch eine vertikale Verschiebebewegung die Rastschieber 40 des Aufnahmekörpers 10 in die Aufnahmenuten der ersten Zusatzverriegelungseinrichtung 107 eingeführt. Dann ist auch eine Verschiebesicherung zwischen dem ersten Aufnahmekörper 10 und der Adaptervorrichtung 100 ausgebildet, sodass nun weder ein vertikales Abheben noch ein horizontales Abschieben des ersten Aufnahmekörpers 10 von der Adaptervorrichtung 100 möglich ist. In entsprechender Weise weisen die zweiten Kopplungsstrukturen 110 bis 112 eine zweite Zusatzverriegelungseinrichtung 111 in Form von Aufnahmenuten in der Trägereinrichtung 104 zum zusätzlichen verschiebegesicherten Verriegeln des zweiten Aufnahmekörpers 102 auf, wenn dieser an der Trägereinrichtung 104 aufgeschoben und verriegelt ist.

Wenn der erste Aufnahmekörper 10 nicht auf der Adaptervorrichtung 100 montiert ist, ist Platz für die Aufnahme des zweiten, größeren Aufnahmekörpers 102. Die Montage und Demontage des größeren Aufnahmekörpers 102 auf der Adaptervorrichtung 100 erfolgt in entsprechender Weise wie für den ersten Aufnahmekörper 10 beschrieben, wobei anstelle der ersten Kopplungsstrukturen 106 bis 108 die zweiten Kopplungsstrukturen 110 bis 112 eingesetzt werden.

Um den Benutzerkomfort weiter zu erhöhen, weist die Adaptervorrichtung 100 gegenüber der Trägereinrichtung 104 ein- und ausklappbare Anschlagstrukturen 114 auf, die eingerichtet sind, dass nach Aufschieben des ersten Aufnahmekörpers 10 oder des zweiten Aufnahmekörpers 102 auf die Trägereinrichtung 104 der jeweilige Aufnahmekörper 10, 102 an den Anschlagstrukturen 114 in einer Verriegelungsposition anschlägt, in welcher der jeweilige Aufnahmekörper 10, 102 an der Adaptervorrichtung 100 verriegelt oder fähig zum Verriegeln ist. Schlägt also der jeweilige Aufnahmekörper 10, 102 vorderseitig an den Anschlagstrukturen 114 an, befindet er sich in der richtigen Position, dass die Rastfüße 34 unter den jeweiligen Verriegelungskörpern 108, 112 befindlich sind und die Rastschieber 40 des jeweiligen Aufnahmekörpers 10, 102 an der Position der jeweiligen Zusatzverriegelungseinrichtung 107, 111 befindlich sind. Dadurch ist ein fehlerrobustes und intuitives Bedienen der Adaptervorrichtung 100 ermöglicht.

An einander gegenüberliegenden vorder- und rückseitigen Kanten der Trägereinrichtung 104 sind pilzförmige Adapterverbindungsstrukturen 118, 120 integral vorgesehen. Die Adapterverbindungsstrukturen 118 sind pilzförmige Überstände, wohingegen die Adapterverbindungsstrukturen 120 korrespondierend geformte und dimensionierte pilzförmige Hinterschnitte bzw. Aussparungen sind. Mehrere Adaptervorrichtungen 100 des in Figur 5 und Figur 6 gezeigten Typs können seriell aneinandergesteckt werden, indem ein jeweiliger pilzförmiger Überstand in einen jeweiligen pilzförmigen Hinterschnitt formschlüssig eingeführt wird. In diesem gekoppelten Zustand fluchten auch die jeweiligen Führungsschienen 106 bzw. 110 der gekoppelten Adaptervorrichtungen 100 miteinander, sodass in einem entsprechenden, die Führungsschienen 106 bzw. 110 freihaltenden, Verschiebezustand der Verriegelungskörper 108 bzw. 112 ein entsprechender Aufnahmekörper 10, 102 über mehrere Adaptervorrichtungen 100 hinweg zu einer gewünschten Zielposition durchgeschoben werden kann.

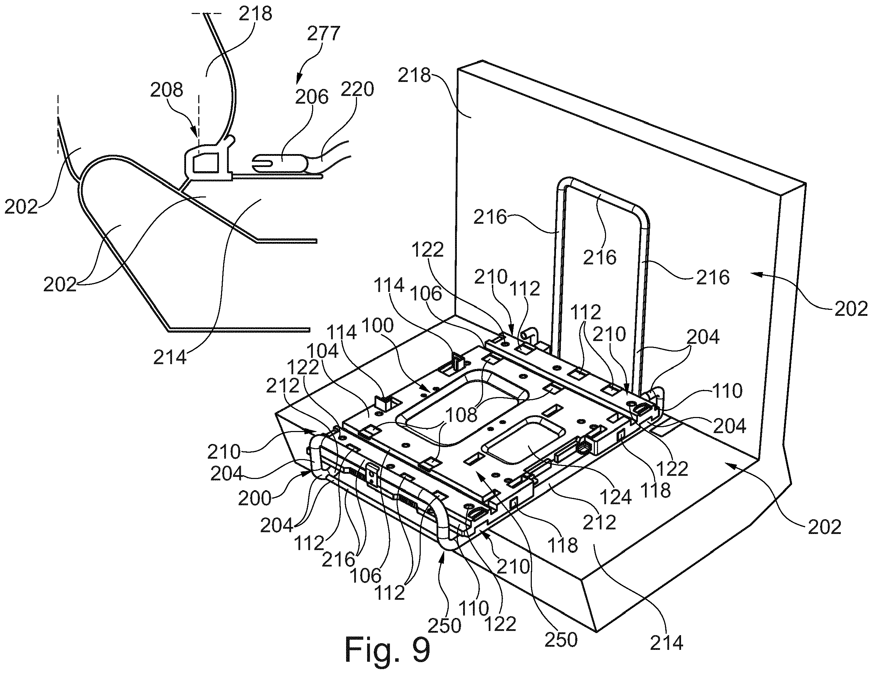

Die Trägereinrichtung 104 vertikal durchdringende Befestigungsstrukturen 122, die gemäß Figur 5 und Figur 6 in Form von durchgehenden Befestigungslöchern zum Aufnehmen von Befestigungsschrauben ausgebildet sind, dienen zum Befestigen der Adaptervorrichtung 100 an einem Befestigungskörper, wie zum Beispiel an einer Montageeinrichtung 200 (siehe Figur 9), einer Erweiterungseinrichtung 300 (siehe Figur 11), einer Wand (nicht gezeigt), etc.

Mittels Betätigens von in Figur 5 gezeigten Betätigungselementen 193 an einer Frontseite der Adaptervorrichtung 100 kann ein Benutzer einen zweiten Aufnahmekörper 102, der an der Adaptervorrichtung 100 in Zustand 3 montiert ist, von der Verschiebesicherung befreien und somit in Zustand 2 rückführen, da durch diese Betätigung Hebelarme 195 (siehe Figur 6) auf die in den Aufnahmenuten der Zusatzverriegelungseinrichtung 111 des Koffers eingefahrene Rastschieber 40 des zweiten Aufnahmekörpers 102 einwirken können.

Eine Aussparung in der Trägereinrichtung 104 bildet einen Tragegriff 124 zum Tragen der Adaptervorrichtung 100 durch einen Benutzer.

Nun bezugnehmend auf Figur 6 weist die Adaptervorrichtung 100 ferner Versteifungsstrukturen 126 auf, die zum Versteifen der aus Kunststoff gebildeten Trägereinrichtung 104 ausgebildet sind. Dies erhöht die Stabilität der Adaptervorrichtung 100.

Eine bodenseitige Verrutschschutzeinrichtung 116 zum Schützen der Adaptervorrichtung 100 vor einem Verrutschen auf einem Teppichuntergrund (zum Beispiel in einem mit Teppich ausgekleideten Kofferraum eines Kraftfahrzeugs) ist in Figur 6 in einem an der Trägereinrichtung 104 inaktiv verstauten Zustand und im Detail in Figur 8 gezeigt.

**Figur 8** zeigt eine Verrutschschutzleiste der Verrutschschutzeinrichtung 116 mit einer Anordnung von Spikes 118 der Adaptervorrichtung 100 gemäß Figur 5 und Figur 6. Gemäß Figur 6 ist die Verrutschschutzeinrichtung 116 in einem deaktivierten Zustand an einer Bodenfläche der Trägereinrichtung 104 angeklemmt und dadurch verstaut. Die Verrutschschutzeinrichtung 116 enthält eine zweidimensionale Anordnung bodenseitiger Spikes 118, die eingerichtet sind, beim Aufsetzen der Adaptervorrichtung 100 auf den Teppich-Untergrund in diesen einzudringen. Die Verrutschschutzeinrichtung 116 ist selektiv an der Trägereinrichtung 104 deaktiviert verstaubar (siehe Figur 6) oder zum Aktivieren des Verrutschschutzes gegenüber der Trägereinrichtung 104 umpositionierbar. Die Verrutschschutzeinrichtung 116 ist aus zwei bodenseitig an der Trägereinrichtung 104 angeordneten Verrutschleisten gebildet, die im aktivierten Zustand V-förmig aufeinander zuweisend an einer Unterseite der Trägereinrichtung 104, diese unterseitig überragend, angeordnet werden können. Um die Verrutschschutzeinrichtung 116 in einen aktivierten Zustand zu überführen, werden die Verrutschleisten aus der in Figur 6 gezeigten inaktiven und an der Trägereinrichtung 104 verklemmten Stellung heraus- und von der Trägereinrichtung 104 zeitweise abgenommen und in zueinander winkelig angeordnete Leistenaufnahmen 191 an der Unterseite der Trägereinrichtung 104 so aufgesteckt, dass die Spikes 118 unterseitig über die Trägereinrichtung 104 hervorstehen und sich dadurch unter Bereitstellung eines Verrutschschutzes in einen Teppichuntergrund (nicht gezeigt) einkrallen können. Die Verrutschleisten sind so konstruiert, dass sie sowohl mit ihrer Schmalseite an den Leistenaufnahmen 191 unter Ausbildung einer Steckverbindung formschlüssig aufgenommen werden können und andererseits mit ihrer Breitseite an den Verstauaufnahmen der Trägereinrichtung 104 unter Ausbildung einer Steckverbindung vertikal zurückversetzt werden können.

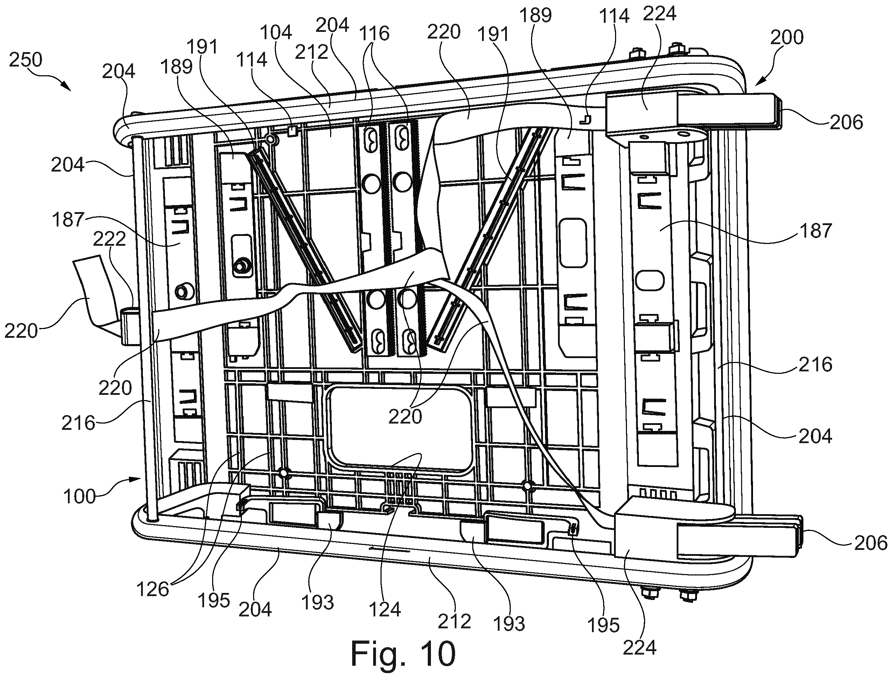

**Figur 9** zeigt eine räumliche Ansicht einer an einem Kraftfahrzeugsitz 202 montierten Montagevorrichtung 250 aus einer im Weiteren näher zu beschreibenden Montageeinrichtung 200 und einer daran montierten Adaptervorrichtung 100 gemäß einem exemplarischen Ausführungsbeispiel der Erfindung. Ferner zeigt Figur 9 ein Detail 277, das die Montage von Steckelementen 206 der Montageeinrichtung 200 an Fixierstrukturen 208 des Kraftfahrzeugsitzes 202 zeigt, die mit einer Karosserie eines Kraftfahrzeugs verbunden sind, das den Kraftfahrzeugsitz 202 enthält. Einige der Merkmale der Montagevorrichtung 250 gemäß Figur 9 sind auch in einer anderen, in Figur 10 und Figur 12 bis Figur 15 dargestellten Montagevorrichtung 250 enthalten und dort zum Teil besser sichtbar, so dass in der folgenden Beschreibung zu Figur 9 zum Teil auch auf Figur 10 und Figur 12 bis Figur 15 Bezug genommen wird.

Die in Figur 9 gezeigte Montagevorrichtung 250 ist aus der Montageeinrichtung 200 als Montagebasis und der Adaptervorrichtung 100 (insbesondere der in Figur 5 und Figur 6 gezeigten Adaptervorrichtung 100) zum Befestigen von Aufnahmekörpern 10, 102 an dem Kraftfahrzeugsitz 202 gebildet.

Die Adaptervorrichtung 100 ist unter Verwendung von vier Schraubbolzen in vier Eckbereichen ihrer Trägereinrichtung 104 an einer Montagestruktur 210 der Montageeinrichtung 200 montiert. Die Schraubbolzen sind durch die Befestigungsstrukturen 122 der Adaptervorrichtung 100 hindurchgeführt und in die Montagestruktur 210 eingeführt und schraubbefestigt. Die Montagestruktur 210 dient somit zum Montieren der Adaptervorrichtung 100 in einer Weise, dass deren Aufnahmefläche zum Befestigen von Aufnahmekörpern 10, 102 oberseitig für eine benutzerdefinierte Montage frei zugänglich bleibt. Die Montagestruktur 210 ist, wie besser in Figur 13 bis Figur 15 zu erkennen, durch vertikale und hohle Metallrohrstücke gebildet, wobei die mit Gewinde versehenen Schraubbolzen durch die Adaptervorrichtung 100 und die Metallrohrstücke geführt und dort verschraubt werden. Jeder der vier Schraubbolzen hat an einer Oberfläche des Bolzenkopfes einen entsprechenden Antrieb (zum Beispiel einen Imbus-Antrieb) zum Eingreifen eines Antriebswerkzeugs (zum Beispiel ein Imbus-Schlüssel).

Die Montageeinrichtung 200 umfasst einen Basiskörper 204 in Form einer schlittenartigen Metallgestängekonstruktion zum Aufsetzen auf den Kraftfahrzeugsitz 202 und zum Halten der Adaptervorrichtung 100 in einem Abstand von dem Kraftfahrzeugsitz 202.

Der Basiskörper 204 ist als metallische Gestängekonstruktion aus hohlen gebogenen und teils verschweißten Rohren ausgebildet. Diese Gestängekonstruktion enthält einander gegenüberliegende und zueinander parallel verlaufende erste Gestänge 212, die sich zum Beispiel im Wesentlichen horizontal entlang einer Sitzfläche 214 des Kraftfahrzeugsitzes 202 erstrecken. Die ersten Gestänge 212 sind in Figur 9 nur zum Teil zu sehen, da sie sich im montierten Zustand der Adaptervorrichtung 100 unterhalb der Adaptervorrichtung 100 befinden. Dadurch wird eine oberseitige Arbeitsfläche der Adaptervorrichtung 110 zum Montieren oder Demontieren von Aufnahmekörpern 10, 102 auch im einem an dem Kraftfahrzeugsitz 202 montierten Zustand der Montagevorrichtung 250 für einen Benutzer zugänglich freigehalten. Ferner weist die Gestängekonstruktion zwei einander gegenüberliegende und gemäß Figur 9 schlaufenförmige zweite Gestänge 216 auf, die sich jeweils abschnittsweise in Richtung entlang bzw. parallel zu einer Rückenlehne 218 des Kraftfahrzeugsitzes 202 erstrecken. Wie in Figur 9 gut zu erkennen ist, erstreckt sich im montierten Zustand der Adaptervorrichtung 100 eines der beiden schlauchförmigen zweiten Gestänge 216 über die Adaptervorrichtung 100 vertikal hinaus entlang einem Großteil der Rückenlehne 218. Dadurch kann selbst dann, wenn an der Adaptervorrichtung 200 ein oder sogar mehrere relativ hohe Aufnahmekörper 10, 102 montiert sind, der oder die Aufnahmekörper 10, 102 beanstandet von der Rückenlehne 218 verbleiben, so dass das zweite Gestänge 216 in Berührkontakt mit der Rückenlehne 218 als Abstandshalter oder Anstoßschutz zu solchen Aufnahmekörpern 10, 102 fungiert. Gleichzeitig hemmt das zweite Gestänge 216 in Kontakt mit der Rückenlehne 218 ein Verkippen der Montagevorrichtung 250. Das zweite Gestänge 216 angrenzend an die Rückenlehne 218 erstreckt sich, wie in Figur 9 gezeigt, wesentlich weiter vertikal nach oben als das gegenüberliegende andere der zweiten Gestänge 216, das ein von der Rückenlehne 218 am weitesten entferntes Ende des Basiskörpers 204 bildet. Dadurch bleibt die gesamte Aufnahmefläche der Adaptervorrichtung 100 für einen Benutzer gut zugänglich.

Ferner enthält die Montageeinrichtung 200 zwei gemäß dem Isofix-Standard (entsprechend der Norm ISO 13216, insbesondere in der Fassung von 1999 oder 2004 oder 2006) ausgebildete Steckelemente 206, die mittels einer jeweiligen, an den Basiskörper 204 angeschraubten und hier aus Kunststoff gebildeten Führungsaufnahme 224 (siehe Figur 10) zum Aufnehmen eines jeweiligen Steckelements 206 angebracht sind. Wenn ein jeweiliges der Steckelemente 206 formschlüssig in eine jeweilige der Führungsaufnahmen 224 eingeführt ist (was auch durch Straffen von unten näher beschriebenen flexiblen Verbindungselementen 220 erfolgen kann), befinden sich die Steckelemente 206 in einer wohldefinierten Stellung, in der eine verkippfreie Fixierung der Montagevorrichtung 250 an dem Kraftfahrzeugsitz 202 erreicht ist. Die Steckelemente 206 dienen zum Verankern der Montageeinrichtung 200 an den Fixierstrukturen 208 des Kraftfahrzeugsitzes 202, wie in dem Detail 277 dargestellt ist.

Nun bezugnehmend auf das Detail 277 sind die Steckelemente 206 der Montageeinrichtung 200 als Isofix-Steckelemente ausgebildet, die zum Verankern an mit der Kraftfahrzeugkarosserie starr verbundenen Isofix-Fixierstrukturen 208 des Kraftfahrzeugsitzes 202 eingerichtet sind. Die Steckelemente 206 sind in die jeweiligen Führungsaufnahmen 224 einführbar. Durch die jeweiligen Führungsaufnahmen 224 sind als Gurte ausgebildete flexible Verbindungselemente 220 durchgeführt, an deren einem Ende die Steckelemente angebracht sind. Durch die jeweiligen Führungsaufnahmen 224 und eine Spannvorrichtung 222 sind die an den Gurten montierten Steckelemente 206 an dem Basiskörper 204 befestigt. Ein Benutzer zieht zum Montieren der Montagevorrichtung 250 an dem Kraftfahrzeugsitz 202 also die Steckelemente 206 aus den Führungsaufnahmen 224 heraus und bewegt diese dank der Flexibilität der Verbindungselemente 220 zu einer gewünschten Position zwischen Sitzfläche 214 und Rückenlehne 218 des Kraftfahrzeugsitzes 202. Die Steckelemente 206 weisen Rasthaken auf, die bei Einführen in die als U-förmige Haken ausgebildeten Fixierstrukturen 208 in diese einrasten und dabei eine zuverlässige Klickverbindung ausbilden.

Die Montageeinrichtung 200 weist ferner die in Figur 10 gut erkennbare Spannvorrichtung 222 auf, die starr an dem lehnenfernen der zweiten Gestänge 216 des Basiskörpers 204 angebracht ist. Ein der Rückenlehne 218 abgewandtes Ende der flexiblen Verbindungselemente 220 kann durch die Spannvorrichtung 222 geführt werden. In diesem Zustand können die flexiblen Verbindungselemente 220 durch Ausüben einer Zugkraft auf das Ende der flexiblen Verbindungselemente 220 gestrafft werden und kann die Spannvorrichtung 222 von einem Benutzer betätigt werden, um nach dem Verankern der Steckelemente 206 an den Fixierstrukturen 208 die flexiblen Verbindungselemente 220 durch Einklemmen an der Spannvorrichtung 222 im gespannten Zustand zu fixieren. Wie in Figur 1 erkennbar ist, können die flexiblen Verbindungselemente 220 aus einem ersten Gurt gebildet sein, an dessen beiden Enden die Steckelemente 206 angebracht sind, und der durch eine Schlaufe an einem Ende eines zweiten Gurts der flexiblen Verbindungselemente 220 durchgeführt ist, wobei das gegenüberliegende zweite Ende des zweiten Gurts durch die Spannvorrichtung 222 durchgeführt ist. Durch diese Gurtkonstruktion sind eine einfache Handhabung, eine zuverlässige Montage, eine Verkippfreiheit und eine günstige Kraftübertragung erreicht.

Obgleich dies in der Figur nicht gezeigt ist, kann die Montageeinrichtung 200 eine Einstelleinrichtung aufweisen, die zum Einstellen einer Höhe und/oder eines Neigungswinkels der an der Montageeinrichtung 200 montierten Adaptervorrichtung 100 eingerichtet ist. Dadurch kann bei einer geneigten Sitzfläche 214 dennoch eine horizontale Arbeitsfläche der Adaptervorrichtung 100 bereitgestellt werden.

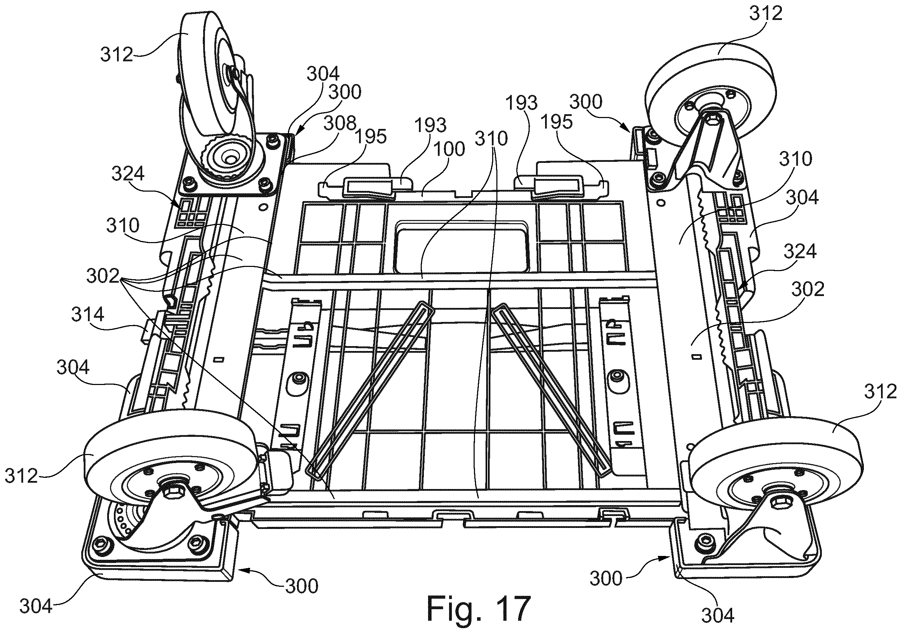

Ebenfalls können an der Montageeinrichtung 200 bodenseitig (zum Beispiel anschraubbare) Rollen (nicht gezeigt) angebracht werden, um die Montageeinrichtung 200 in einem von dem Kraftfahrzeugsitz 202 getrennten Zustand rollend fortzubewegen. Ein solches Anbringen von Rollen an der Montageeinrichtung 200 kann in ähnlicher Weise erfolgen, wie in Figur 17 für Rollen 312 einer Erweiterungseinrichtung 300 gezeigt.

**Figur 10** zeigt eine unterseitige Ansicht einer Montageeinrichtung 200, die ähnlich zu der Montageeinrichtung 200 gemäß Figur 9 ausgestaltet ist, mit daran montierter Adaptervorrichtung 100. Figur 10 ist insbesondere zu entnehmen, dass die flexiblen Verbindungselemente 220 einen ersten Gurt aufweisen, der die beiden Steckelemente 206 miteinander verbindet, und einen zweiten Gurt mit einem schlauchförmigen Ende aufweisen, durch das der erste Gurt hindurchgeführt ist. Ein gegenüberliegendes Ende des zweiten Gurts ist durch die Spannvorrichtung 222 hindurchgeführt.

**Figur 11** zeigt eine Erweiterungsanordnung 380 gemäß einem exemplarischen Ausführungsbeispiel der Erfindung aus einer unterseitigen Erweiterungsvorrichtung 350, einer hieran befestigten Aufbewahrungsbox als Aufnahmekörper 352 und einer oberseitig an dem Aufnahmekörper 352 montierten oberseitigen Erweiterungsvorrichtung 350. Die unterseitige Erweiterungsvorrichtung 350 ist aus einer unterseitigen Erweiterungseinrichtung 300 und einer daran montierten Adaptervorrichtung 100 gemäß Figur 5 und Figur 6 aufgebaut. Die oberseitige Erweiterungsvorrichtung 350 ist aus einer oberseitigen Erweiterungseinrichtung 300 und einer weiteren Adaptervorrichtung 100 gemäß Figur 5 und Figur 6 aufgebaut und auf der Oberseite des Aufnahmekörper 352 zum Beispiel mittels Schraubverbindungen befestigt. Obgleich dies in Figur 11 nicht gezeigt ist, kann an den Kopplungsstrukturen 106 bis 108, 110 bis 112 auf der oberseitigen Adaptervorrichtung 100 mindestens ein weiterer Aufnahmekörper 10, 102 (nicht gezeigt) montiert werden, zum Beispiel ein Koffer.

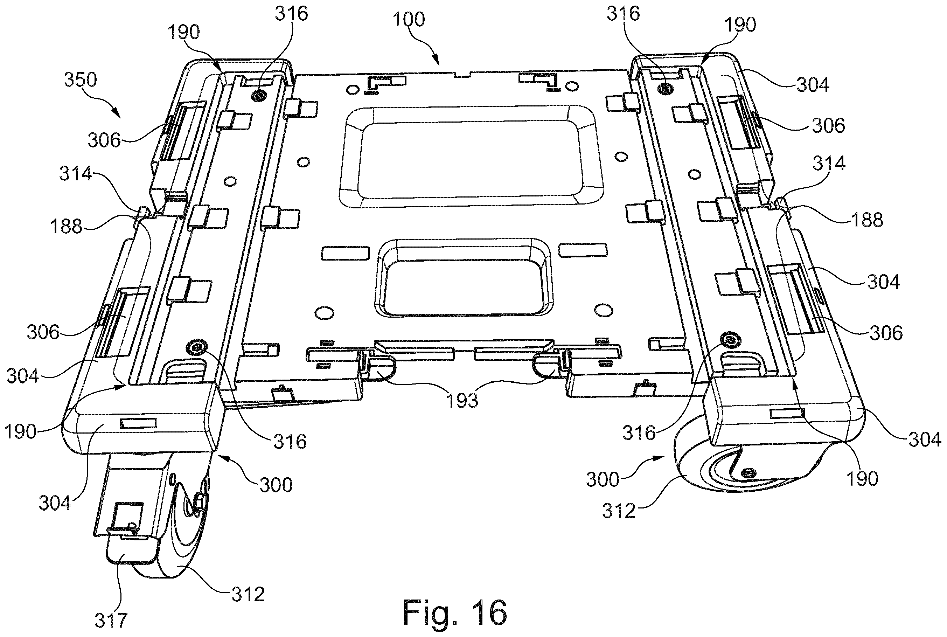

Mit Bezugszeichen 304, 306, 312, 314 und 317 sind in Figur 11 einige Komponenten der Erweiterungseinrichtung 300 dargestellt bzw. angedeutet. Diese Komponenten werden unten bezugnehmend auf Figur 16 bis Figur 20 näher erläutert.

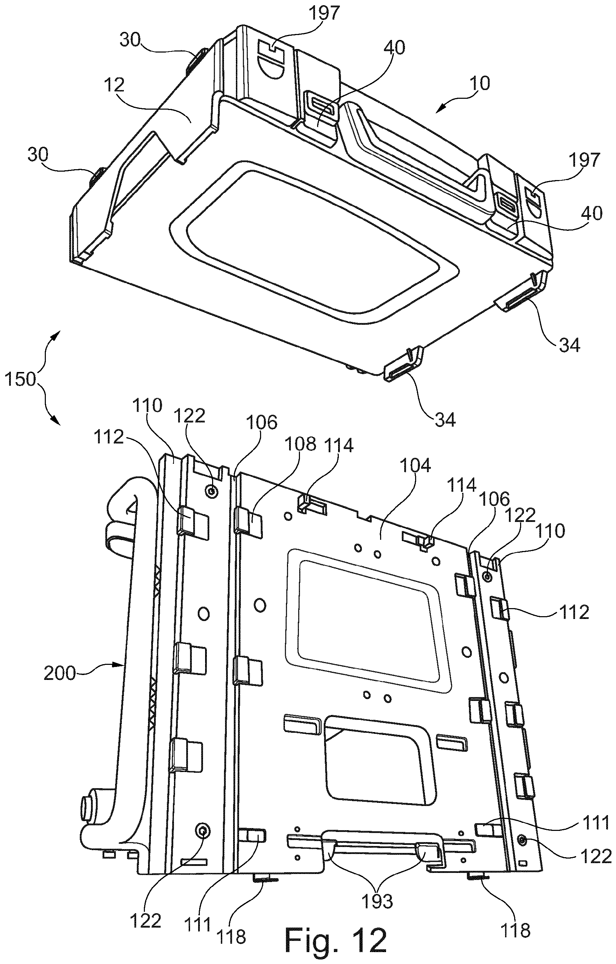

**Figur 12** zeigt eine Aufnahmeanordnung 150 aus einem als Koffer (siehe Figur 1 bis Figur 4) zum Transportieren von Transportgut ausgebildeten Aufnahmekörper 10 und einer zu dessen Befestigung ausgebildeten Adaptervorrichtung 100 (siehe Figur 5 und Figur 6) gemäß einem exemplarischen Ausführungsbeispiel der Erfindung, wobei die Adaptervorrichtung 100 (und damit die Aufnahmeanordnung 150) ihrerseits an der Montageeinrichtung 200 gemäß Figur 10 montiert ist. Gemäß Figur 12 ist der Aufnahmekörper 10 noch nicht an der Adaptervorrichtung 100 montiert. Alternativ zu dem Aufnahmekörper 10 kann auch ein größerer Koffer (siehe Aufnahmekörper 102 gemäß Figur 18 oder Figur 19) auf der Adaptervorrichtung 100 montiert werden. Mittels Verschlusseinrichtungen 197 kann ein jeweiliger der Aufnahmekörper 10, 102 benutzerdefiniert geöffnet werden, um Zugang zu einem Inneren zu erhalten, oder verriegelnd verschlossen werden.

Der erste Aufnahmekörper 10 weist weitere erste Kopplungsstrukturen 34, 36, 38, 40 auf (siehe Beschreibung zu Figur 1 bis Figur 4), die ausschließlich am Korpus 12 des ersten Aufnahmekörpers 10 vorgesehen sind, und zum Koppeln mit den ersten Kopplungsstrukturen 106 bis 108 der Adaptervorrichtung 100 positioniert und dimensioniert sind. Der alternativ zu dem ersten Aufnahmekörper 10 an der Adaptervorrichtung 100 montierbare zweite Aufnahmekörper 102 weist weitere zweite Kopplungsstrukturen 34, 36, 38, 40 (siehe Beschreibung zu Figur 1 bis Figur 4) ausschließlich an seinem Korpus 12 auf (siehe Figur 18 oder Figur 19), die zum Koppeln mit den zweiten Kopplungsstrukturen 110 bis 112 der Adaptervorrichtung 100 positioniert und dimensioniert sind.

Die weiteren ersten Kopplungsstrukturen 34, 36, 38, 40 und die weiteren zweiten Kopplungsstrukturen 34, 36, 38, 40 sind ausgebildet, sowohl zum vertikal abnehmbar verschiebegesicherten Stapeln des ersten Aufnahmekörpers 10 bzw. des zweiten Aufnahmekörpers 102 an der Adaptervorrichtung 100 gemäß Zustand 1 als auch zum vertikal unabnehmbar miteinander Koppeln des ersten Aufnahmekörpers 10 bzw. des zweiten Aufnahmekörpers 102 an der Adaptervorrichtung 100 gemäß Zustand 2 (ohne Verschiebesicherung) oder Zustand 3 (mit Verschiebesicherung) beizutragen.

**Figur 13** zeigt die Aufnahmeanordnung 150 gemäß Figur 12 in Zustand 1, in dem der Aufnahmekörper 10 vertikal abnehmbar verschiebegesichert auf der Adaptervorrichtung 100 angeordnet ist. Das übereinander vertikal abnehmbar verschiebegesicherte Stapeln wird durch unterseitige Aufnahmenuten 36 von Rastfüßen 34 an äußeren unterseitigen Kantenbereichen des ersten Aufnahmekörpers 10 (bzw. des zweiten Aufnahmekörpers 102) und durch korrespondierende Überstände der Verriegelungsstrukturen 108 bzw. 112 der Adaptervorrichtung 100 bewerkstelligt. Es sei erwähnt, dass die Adaptervorrichtung 100, der Aufnahmekörper 10 und die Montageeinrichtung 200 gemeinsam eine Montageanordnung 280 gemäß einem exemplarischen Ausführungsbeispiel der Erfindung bilden.

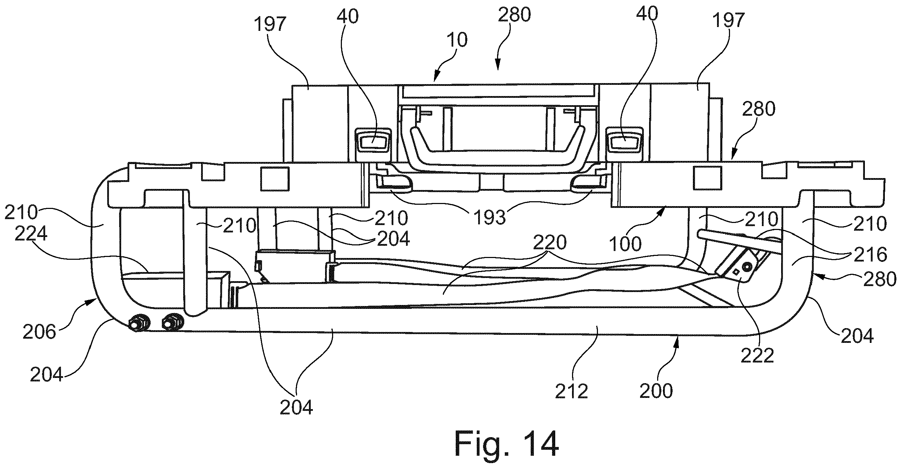

**Figur 14** zeigt die Aufnahmeanordnung 150 gemäß Figur 12 in einem Betriebszustand, in dem der Aufnahmekörper 10 gemäß Zustand 2 vertikal unabnehmbar, aber horizontal verschiebbar mit der Adaptervorrichtung 100 gekoppelt angeordnet ist. Das übereinander vertikal unabnehmbare Koppeln wird durch unterseitige Koppelnasen 38 von Rastfüßen 34 an äußeren unterseitigen Kantenbereichen des ersten Aufnahmekörpers 10 (bzw. des zweiten Aufnahmekörpers 102) in Zusammenwirken mit den Verriegelungsstrukturen 108 bzw. 112 der Adaptervorrichtung 100 bewerkstelligt.

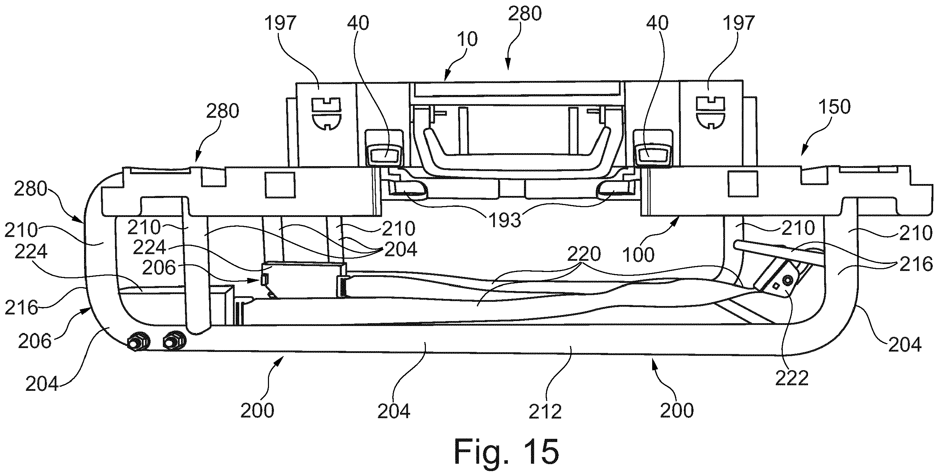

Ferner sind die weiteren ersten Kopplungsstrukturen 34, 36, 38, 40 und die weiteren zweiten Kopplungsstrukturen 34, 36, 38, 40 ausgebildet, dass in Zusammenwirkung mit den ersten Kopplungsstrukturen 106 bis 108 oder den zweiten Kopplungsstrukturen 110 bis 112 der Adaptervorrichtung 100 der erste Aufnahmekörper 10 oder der zweite Aufnahmekörper 102 einerseits und die Adaptervorrichtung 100 andererseits in dem übereinander vertikal unabnehmbar miteinander gekoppelten Zustand selektiv gegeneinander verschiebbar sind (siehe Zustand 2 gemäß Figur 14) oder mittels Betätigens speziell der Kopplungsstrukturen 40, 107, 111 gegeneinander verschiebesicherbar sind. **Figur 15** zeigt die Aufnahmeanordnung 150 gemäß Figur 12 in Zustand 3, in dem der Aufnahmekörper 10 vertikal unabnehmbar und horizontal verschiebegesichert mit der Adaptervorrichtung 100 gekoppelt angeordnet ist. Das Verschiebesichern in dem übereinander vertikal unabnehmbar miteinander gekoppelten Zustand wird durch die als Aufnahmenuten in der Trägereinrichtung 104 ausgebildeten Zusatzverriegelungseinrichtungen 107, 111 der Adaptervorrichtung 100 und korrespondierende Rastschieber 40 des ersten Aufnahmekörpers 10 bzw. des zweiten Aufnahmekörpers 102 bewirkt, wenn die Rastschieber 40 in die Aufnahmenuten 107, 111 eingeschoben werden. Gemäß Figur 14 befinden sich die Rastschieber 40 außer Eingriff mit der Zusatzverriegelungseinrichtung 107 und lassen daher ein Verschieben zwischen Adaptervorrichtung 100 und Aufnahmekörper 10 in horizontaler Richtung zu. Gemäß Figur 15 befinden sich die nun nach unten geschobenen Rastschieber 40 in Eingriff mit der Zusatzverriegelungseinrichtung 107 und verhindern daher ein Verschieben zwischen Adaptervorrichtung 100 und Aufnahmekörper 10 in horizontaler Richtung.

Der Teil der Kopplungsstrukturen 40, 107, 111, die in dem übereinander vertikal unabnehmbar miteinander gekoppelten Zustand 3 zum Verschiebesichern beitragen (siehe Figur 15), ist unabhängig von einem anderen Teil der Kopplungsstrukturen 34, 36, 38, 106, 108, 110, 112 ausgebildet und betätigbar, die zum vertikal abnehmbar verschiebegesicherten Stapeln gemäß Zustand 1 (siehe Figur 13) als auch zum vertikal unabnehmbar miteinander Koppeln gemäß Zustand 2 und 3 beitragen (siehe Figur 14 und Figur 15).

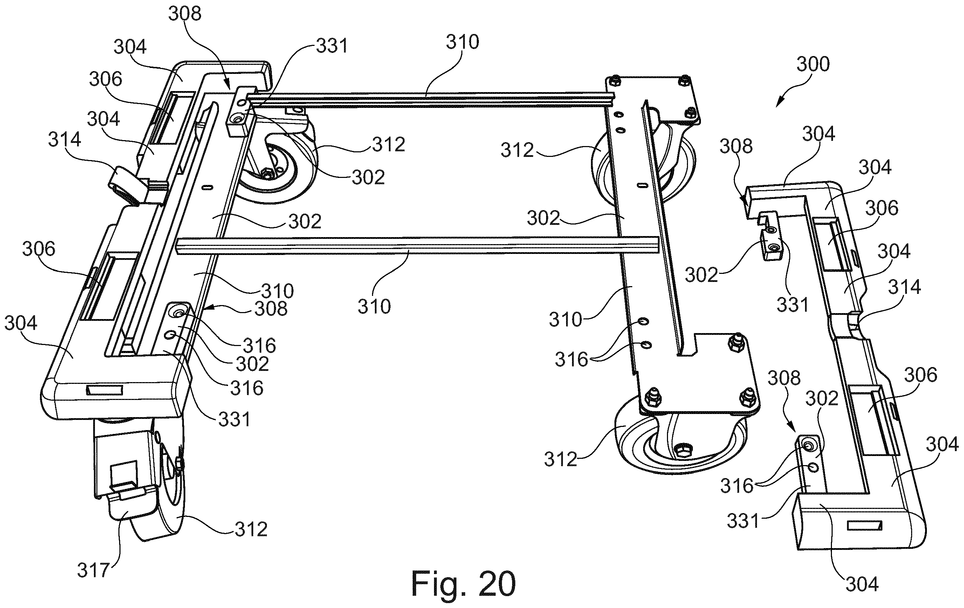

**Figur 16** zeigt eine räumliche Ansicht einer Erweiterungsvorrichtung 350 aus einer Erweiterungseinrichtung 300 und einer Adapterplatte 100 gemäß einem exemplarischen Ausführungsbeispiel der Erfindung. **Figur 17** zeigt die Erweiterungsvorrichtung 350 gemäß Figur 16 in einer unterseitigen Ansicht. **Figur 18** zeigt eine Erweiterungsanordnung 380 aus der Erweiterungsvorrichtung 350 gemäß Figur 16 und einem daran montierten Aufnahmekörper 102 (in Form eines gegenüber dem den Aufnahmekörper 10 bildenden Koffer größeren Koffer), der mittels der zweiten Kopplungsstrukturen 110 bis 112 an der Adaptervorrichtung 100 befestigt ist. **Figur 19** zeigt die Erweiterungsanordnung 380 gemäß Figur 18 mit einem weiteren Aufnahmekörper 10 geringerer Größe und mit einer weiteren Adaptervorrichtung 100, wobei die weitere Adaptervorrichtung 100 auf dem Aufnahmekörper 102 gemäß Figur 18 befestigt und der weitere Aufnahmekörper 10 mittels der ersten Kopplungsstrukturen 106 bis 108 auf der weiteren Adaptervorrichtung 100 befestigt ist. **Figur 20** schließlich zeigt eine räumliche Ansicht der teilweise demontierten Erweiterungseinrichtung 300 ohne Adaptervorrichtung 100.

Die Erweiterungseinrichtung 300 dient zum räumlichen Erweitern einer Aufnahmefläche der Adaptervorrichtung 100, d.h. der aktiven Oberfläche der Adaptervorrichtung 300, an der die Kopplungsstrukturen 106 bis 108, 110 bis 112 zum Ankoppeln der verschiedenen Aufnahmekörper 10, 102 angeordnet sind, um dadurch ausgehend von der Adaptervorrichtung 100 die Möglichkeit der bedarfsweisen Befestigung eines noch größeren Aufnahmekörpers 352 (zum Beispiel einer Aufbewahrungsbox, vergleiche Figur 11) zu erschließen.

Die Erweiterungseinrichtung 300 weist hierzu eine Stützstruktur 302 auf, die zum Stützen der Adaptervorrichtung 100 in vier umfänglichen Eckbereichen ihrer Trägereinrichtung 104 eingerichtet und am besten in Figur 17 und Figur 20 erkennbar ist. Wie in Figur 20 erkennbar ist, sind hierfür als Teil der Stützstruktur 302 vier Auflageklötze 331 vorgesehen, auf denen die Adaptervorrichtung 100 mit physischem Kontakt aufliegt. Die Stützstruktur 302 ist strukturell ausgestaltet, die Adaptervorrichtung 100 ausschließlich im Bereich von zwei einander gegenüberliegenden Seitenkanten 188 der Adaptervorrichtung 100 zu stützen, genauer gesagt in den vier Eckbereichen der Adaptervorrichtung 100. Dadurch bleiben die anderen beiden Seitenkanten der Adaptervorrichtung 100 weitestgehend frei zugänglich, was insbesondere ein Aufschieben eines jeweiligen Aufnahmekörpers 10, 102 auf die jeweiligen Führungsschienen 106, 110 im an der Erweiterungseinrichtung 300 montierten Zustand der Adaptervorrichtung 100 begünstigt (siehe zum Beispiel Figur 16). Die Stützstruktur 302 ist ferner eingerichtet, die Adaptervorrichtung 100 ausschließlich mittels der Auflageklötze 331 und somit ausschließlich an einer Unterseite der Adaptervorrichtung 100 zu stützen und die oberseitige Aufnahmefläche der Adaptervorrichtung 100 dadurch vollständig zum Befestigen von Aufnahmekörpern 10, 102 freizuhalten. Gemäß Figur 16 bis Figur 20 ist die Stützstruktur 302 aus Stützelementen 308 in Form der vier leicht federnd gelagerten Auflageklötze 331 und die Stützelemente 308 verbindenden Verbindungsstreben 310 gebildet. Die Stützelemente 308 sind aus Kunststoff, wohingegen die Verbindungsstreben 310 aus Metall hergestellt sind.

Eine aus Kunststoff gebildete Erweiterungsstruktur 304 der Erweiterungseinrichtung 300 ist dazu eingerichtet, in einem mittels der Stützstruktur 302 gestützten Zustand der Adaptervorrichtung 100 die Aufnahmefläche der Adaptervorrichtung 100 teilumfänglich über deren räumliche Begrenzung hinaus zu erweitern. Zwei U-förmige Erweiterungsstücke der Erweiterungseinrichtung 300, an deren beiden Enden sich jeweils zwei der Auflageklötze 331 befinden, schmiegen sich hierfür im montierten Zustand an eine jeweilige der Seitenkanten 188 der Adaptervorrichtung 100 an und setzen diese daher seitlich fort. Wie in Figur 17 erkennbar ist, ist die Unterseite der beiden U-förmigen Erweiterungsstücke der Erweiterungseinrichtung 300 mit Verstärkungsstreben 324 ausgestattet, um die Tragekapazität der Erweiterungseinrichtung 300 zu erhöhen. Eine gemäß Figur 16, Figur 18 bis Figur 20 obere Oberfläche (auch Erweiterungsoberfläche genannt) der beiden U-förmigen Erweiterungsstücke dient der Erweiterung der Aufnahmefläche der Adaptervorrichtung 100. Die Erweiterungsstruktur 304 ist somit ausgebildet, die Adaptervorrichtung 100 ausschließlich im Bereich der zwei einander gegenüberliegenden Seitenkanten 188 und in angrenzenden Eckbereichen 190 der Adaptervorrichtung 100 zu erweitern (vergleiche Figur 16). Ferner ist die Erweiterungsstruktur 304 so ausgebildet, dass in einem mittels der Stützstruktur 302 gestützten Zustand der Adaptervorrichtung 100 die aktive Aufnahmefläche der Adaptervorrichtung 100 im Wesentlichen bündig mit der aktiven Erweiterungsoberfläche der Erweiterungsstruktur 304 abschließt (siehe Figur 16).

Die Erweiterungsstruktur 304 erstreckt sich so weit nach außen, dass bei Befestigung des Aufnahmekörpers 352 ausschließlich an Befestigungsstrukturen 306 der Erweiterungseinrichtung 300 sich die Erweiterungsstruktur 304 weiter nach außen erstreckt als der aufgenommene Aufnahmekörper 352. Somit dienen die U-förmigen Erweiterungsstücke auch als Anstoßschutz für den Aufnahmekörper 352.

Die Befestigungsstrukturen 306, die gemäß Figur 16 bis Figur 20 in Form von vier Aufnahmenuten in der Erweiterungsoberfläche der U-förmigen Erweiterungsstücke ausgebildet sind, sind in der Erweiterungsoberfläche der Erweiterungsstruktur 304 eingeformt und sind speziell zum Befestigen von Füßen oder Bodenbereichen eines als Aufbewahrungsbox ausgebildeten Aufnahmekörpers 352 eingerichtet (vergleiche Figur 11). Für die Tragestabilität ist von Vorteil, dass der Aufnahmekörper 352 ausschließlich von der Erweiterungseinrichtung 300, nicht von der Adaptervorrichtung 100, getragen wird. In entsprechender Weise wird, wenn einer der Aufnahmekörper 10, 102 an der Erweiterungsvorrichtung 350 befestigt wird, die Tragelast ausschließlich von der Adaptervorrichtung 100 aufgenommen. Diese Tragelogik hat sich als noch zuverlässiger herausgestellt als eine Stützung eines Aufnahmekörper 10, 102, 352 teils an der Adaptervorrichtung 100 und teils an der Erweiterungseinrichtung 300.

An der Unterseite der Verbindungstreben 310 sind vier Rollen 312 angeschraubt, die zum rollenden Fortbewegen der Erweiterungseinrichtung 300 samt Adaptervorrichtung 100 dienen. Um ein unerwünschtes Wegrollen der Erweiterungseinrichtung 300 bedarfsweise zu unterbinden, sind die Rollen 312 mit Arretierstrukturen 317 versehen. Wenn ein Benutzer die Arretierstrukturen 317 betätigt, sind die Rollen 312 an einer Bewegung gehindert.

Ferner ist in etwa in der Seitenmitte der beiden einander gegenüberliegenden U-förmigen Erweiterungsstücke jeweils eine Verriegelungsstruktur 314 an der Erweiterungsstruktur 304 angebracht, die dazu dient, mit dem Aufnahmekörper 352 verriegelt zu werden, wenn dieser an der Erweiterungsstruktur 304 aufgenommen ist.

Eine Verbindungsstruktur 316 an den Auflageklötzen 331 und an den Verbindungsstreben 310 ist zum Verbinden der Erweiterungseinrichtung 300 mit der Adaptervorrichtung 100 mittels Verschraubens eines Montagebolzens mit Gewinde eingerichtet.

Ergänzend ist darauf hinzuweisen, dass "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Montageeinrichtung (200) zum Montieren einer Adaptervorrichtung (100) zum Befestigen von Aufnahmekörpern (10, 102), insbesondere von mindestens einem Koffer, an einem Kraftfahrzeugsitz (202), wobei die Montageeinrichtung (200) aufweist:
einen Basiskörper (204) zum Aufsetzen auf den Kraftfahrzeugsitz (202);
Steckelemente (206), die an dem Basiskörper (204) angebracht sind und zum Verankern der Montageeinrichtung (200) an Fixierstrukturen (208) des Kraftfahrzeugsitzes (202) eingerichtet sind;
eine Montagestruktur (210) an dem Basiskörper (204), die zum Montieren der Adaptervorrichtung (100) zum Befestigen von Aufnahmekörpern (10, 102) eingerichtet ist;
wobei die Steckelemente (206) mittels flexibler Verbindungselemente (220), insbesondere Verbindungsgurte und/oder Verbindungsseile, an dem Basiskörper (204) befestigt sind;
**dadurch gekennzeichnet, dass**:
die Steckelemente (206) als Isofix-Steckelemente ausgebildet sind, die zum Verankern an Isofix-Fixierstrukturen des Kraftfahrzeugsitzes (202) eingerichtet sind;
und die Montageeinrichtung (200) eine an dem Basiskörper (204) angebrachte Führungsaufnahme (224) zum geführten Aufnehmen der Steckelemente (206) aufweist.

2. Montageeinrichtung (200) gemäß Anspruch 1, wobei der Basiskörper (204) als Gestängekonstruktion, insbesondere Metallgestängekonstruktion, ausgebildet ist, wobei insbesondere die Gestängekonstruktion einander gegenüberliegende, insbesondere zueinander parallel verlaufende, erste Gestänge (212) aufweist, die sich entlang einer Sitzfläche (214) des Kraftfahrzeugsitzes (202) erstrecken und sich im montierten Zustand der Adaptervorrichtung (100) unterhalb der Adaptervorrichtung (100) befinden.

3. Montageeinrichtung (200) gemäß Anspruch 2, wobei die Gestängekonstruktion einander gegenüberliegende, insbesondere schlaufenförmige, zweite Gestänge (216) aufweist, die sich jeweils zumindest abschnittsweise in Richtung entlang einer Rückenlehne (218) des Kraftfahrzeugsitzes (202) erstrecken und von denen sich im montierten Zustand der Adaptervorrichtung (100) zumindest eine zumindest abschnittsweise über zumindest einen Teil der Adaptervorrichtung (100) vertikal hinaus erstreckt, wobei insbesondere sich eines der zweiten Gestänge (216) angrenzend an die Rückenlehne (218) vertikal wesentlich weiter nach oben erstreckt, insbesondere eine mindestens dreifache vertikale Erstreckungslänge hat, als ein anderes der zweiten Gestänge (216), das ein von der Rückenlehne (218) am weitesten entferntes Ende des Basiskörpers (204) bildet.

4. Montageeinrichtung (200) gemäß einem der Ansprüche 1 bis 3, aufweisend zumindest eines der folgenden Merkmale:
wobei die Montagestruktur (210), insbesondere vertikal und langgestreckt verlaufende, Montagelöcher an dem Basiskörper (204) und Montagebolzen, insbesondere Montageschrauben, zum Durchführen durch die Montagelöcher und durch korrespondierende Befestigungslöcher (122) der Adaptervorrichtung (100) aufweist, wobei die Adaptervorrichtung (100) mittels Einführens der Montagebolzen in die Montagelöcher und die Befestigungslöcher (122) und mittels Befestigens, insbesondere Verschraubens, der Montagebolzen an den Montagelöchern und/oder den Befestigungslöchern an der Montageeinrichtung (200) montierbar ist;
aufweisend eine Spannvorrichtung (222), die von einem Benutzer betätigbar ist, um nach dem Verankern der Steckelemente (206) an den Fixierstrukturen (208) die flexiblen Verbindungselemente (220) zu spannen;
wobei die Steckelemente (206) ausgebildet sind, an Fixierstrukturen (208) zwischen Rückenlehne (218) und Sitzfläche (214) des Kraftfahrzeugsitzes (202) verankert zu werden und dadurch eine Verankerung im Inneren des Kraftfahrzeugsitzes (202) zu bewerkstelligen;
aufweisend eine Einstelleinrichtung, die zum Einstellen einer Höhe und/oder eines Neigungswinkels der an der Montageeinrichtung (200) montierten Adaptervorrichtung (100) eingerichtet ist;
aufweisend Rollen, die bodenseitig an dem Basiskörper (204) angebracht oder anbringbar sind, um die Montageeinrichtung (200) in einem von dem Kraftfahrzeugsitz (202) getrennten Zustand rollend fortzubewegen.

5. Montagevorrichtung (250) zum Befestigen von Aufnahmekörpern (10, 102) an einem Kraftfahrzeugsitz (202), aufweisend:
eine Adaptervorrichtung (100) zum Befestigen von Aufnahmekörpern (10, 102);
eine Montageeinrichtung (200) gemäß einem der Ansprüche 1 bis 4, an deren Montagestruktur (210) die Adaptervorrichtung (100) montiert ist.

6. Montagevorrichtung (250) gemäß Anspruch 5, wobei die Adaptervorrichtung (100) zum Befestigen von Aufnahmekörpern (10, 102) unterschiedlicher Größe ausgebildet ist, und insbesondere aufweist:
eine Trägereinrichtung (104) zum Tragen eines befestigten Aufnahmekörpers (10, 102);
erste Kopplungsstrukturen (106 bis 108) an der Trägereinrichtung (104), die zum Befestigen eines ersten Aufnahmekörpers (10) einer ersten Größe mittels Aufschiebens und Verriegelns an den ersten Kopplungsstrukturen (106 bis 108) ausgebildet ist;
zweite Kopplungsstrukturen (110 bis 112) an der Trägereinrichtung (104), die zum Befestigen eines zweiten Aufnahmekörpers (102) einer zweiten Größe mittels Aufschiebens und Verriegelns an den zweiten Kopplungsstrukturen (110 bis 112) ausgebildet ist.

7. Montagevorrichtung (250) gemäß Anspruch 6, wobei die ersten Kopplungsstrukturen (106 bis 108) mindestens eine erste Führungsschiene (106), insbesondere zwei zueinander parallele und in einem ersten Abstand voneinander beabstandete erste Führungsschienen (106), aufweist, wobei entlang der mindestens einen ersten Führungsschiene (106) der erste Aufnahmekörper (10) bis zu einer ersten Verriegelungsposition aufschiebbar ist.

8. Montagevorrichtung (250) gemäß Anspruch 7, wobei die zweiten Kopplungsstrukturen (110 bis 112) mindestens eine zweite Führungsschiene (110), insbesondere zwei zueinander parallele und in einem von dem ersten Abstand unterschiedlichen zweiten Abstand voneinander beabstandete zweite Führungsschienen (110), aufweist, wobei entlang der mindestens einen zweiten Führungsschiene (110) der zweite Aufnahmekörper (102) bis zu einer zweiten Verriegelungsposition aufschiebbar ist.

9. Montagevorrichtung (250) gemäß Anspruch 7 oder 8, wobei die ersten Kopplungsstrukturen (106 bis 108) mindestens einen ersten Verriegelungskörper (108), insbesondere mindestens zwei entlang der mindestens einen ersten Führungsschiene (106) beabstandete Verriegelungskörper (108), aufweist, wobei bei Aufschieben des ersten Aufnahmekörpers (10) entlang der mindestens einen ersten Führungsschiene (106) bis zu der ersten Verriegelungsposition der mindestens eine erste Verriegelungskörper (108) zum an der ersten Verriegelungsposition vertikal unabnehmbaren Verriegeln des ersten Aufnahmekörpers (10) an der Adaptervorrichtung (100) ausgebildet ist.

10. Montagevorrichtung (250) gemäß Anspruch 8 oder 9, wobei die zweiten Kopplungsstrukturen (110 bis 112) mindestens einen zweiten Verriegelungskörper (112), insbesondere zwei oder mehr entlang der mindestens einen zweiten Führungsschiene (110) beabstandete Verriegelungskörper (112), aufweist, wobei bei Aufschieben des zweiten Aufnahmekörpers (102) entlang der mindestens einen zweiten Führungsschiene (110) bis zu der zweiten Verriegelungsposition der mindestens eine zweite Verriegelungskörper (102) zum an der zweiten Verriegelungsposition vertikal unabnehmbaren Verriegeln des zweiten Aufnahmekörpers (102) an der Adaptervorrichtung (100) ausgebildet ist, wobei insbesondere der mindestens eine erste Verriegelungskörper (108) und/oder der mindestens eine zweite Verriegelungskörper (112), insbesondere vor einem Verriegeln oder zum Verriegeln des jeweiligen Aufnahmekörpers (10, 102), winkelig, insbesondere unter Freilassen eines Spalts zwischen einem Boden der jeweiligen Führungsschiene (106, 110) und dem jeweiligen Verriegelungskörper (110, 112) in die jeweilige Führungsschiene (106, 110) hinein verschiebbar ist.

11. Montagevorrichtung (250) gemäß einem der Ansprüche 6 bis 10, aufweisend zumindest eines der folgenden Merkmale:
wobei die ersten Kopplungsstrukturen (106 bis 108) und/oder die zweiten Kopplungsstrukturen (110 bis 112) ausgebildet sind, dass der erste Aufnahmekörper (10) oder der zweite Aufnahmekörper (102) mittels der Kopplungsstrukturen (106 bis 108, 110 bis 112) auf der Adaptervorrichtung (100) selektiv vertikal abnehmbar verschiebegesichert stapelbar ist, oder mittels des Aufschiebens und des Verriegelns an den ersten Kopplungsstrukturen (106 bis 108) und/oder an den zweiten Kopplungsstrukturen (110 bis 112) vertikal unabnehmbar miteinander koppelbar sind, wobei insbesondere der mindestens eine erste Verriegelungskörper (108) und/oder der mindestens eine zweite Verriegelungskörper (112) ausgebildet ist oder sind, dass der erste Aufnahmekörper (10) und/oder der zweite Aufnahmekörper (102) mittels eines jeweiligen der Verriegelungskörper (108, 112) auf der Adaptervorrichtung (100) vertikal abnehmbar verschiebegesichert stapelbar ist;
wobei die Trägereinrichtung (104) als Trägerplatte ausgebildet ist;
aufweisend mindestens eine, insbesondere gegenüber der Trägereinrichtung (104) ein- und ausklappbare, Anschlagstruktur (114), die eingerichtet ist, dass nach Aufschieben des ersten Aufnahmekörpers (10) und/oder des zweiten Aufnahmekörpers (102) der jeweilige Aufnahmekörper (10, 102) an der mindestens einen Anschlagstruktur (114) in einer Verriegelungsposition anschlägt, in welcher der jeweilige Aufnahmekörper (10, 102) an der Adaptervorrichtung (100) verriegelbar oder verriegelt ist;
wobei die ersten Kopplungsstrukturen (106 bis 108) und/oder die zweiten Kopplungsstrukturen (110 bis 112) ferner eine erste Zusatzverriegelungseinrichtung (107) zum zusätzlichen verschiebegesicherten Verriegeln des ersten Aufnahmekörpers (10) aufweisen, wenn dieser an der Trägereinrichtung (104) aufgeschoben und verriegelt ist, und/oder eine zweite Zusatzverriegelungseinrichtung (111) zum zusätzlichen verschiebegesicherten Verriegeln des zweiten Aufnahmekörpers (102) aufweisen, wenn dieser an der Trägereinrichtung (104) aufgeschoben und verriegelt ist;
wobei die Adaptervorrichtung (100) Befestigungslöcher (122) zum Befestigen der Adaptervorrichtung (100) an der Montageeinrichtung (200) aufweist, insbesondere Befestigungslöcher zum Aufnehmen von Montagebolzen der Montagestruktur (210) der Montageeinrichtung (200).

12. Montageanordnung (280), aufweisend:
eine Montagevorrichtung (250) gemäß einem der Ansprüche 5 bis 11;
mindestens einen Aufnahmekörper (10, 102), der an der Adaptervorrichtung (100) befestigt ist.

13. Montageanordnung (280) gemäß Anspruch 12, wobei der mindestens eine Aufnahmekörper aus einer Gruppe ausgewählt ist, die besteht aus einem Koffer (10, 102) zum Transportieren von Transportgut, einem ersten Koffer (10) einer ersten Größe und einem zweiten Koffer (102) einer zweiten Größe, einer weiteren Adaptervorrichtung (100) und einer Aufbewahrungsbox (352).

14. Verfahren zum Montieren einer Adaptervorrichtung (100) zum Befestigen von Aufnahmekörpern (10, 102) an einem Kraftfahrzeugsitz (202), wobei das Verfahren aufweist:
Aufsetzen eines Basiskörpers (204) einer Montageeinrichtung (200) auf den Kraftfahrzeugsitz (202);
Verankern der Montageeinrichtung (200) an Fixierstrukturen (208) des Kraftfahrzeugsitzes (202) mittels Steckelementen (206), die an dem Basiskörper (204) angebracht sind;
Montieren der Adaptervorrichtung (100) zum Befestigen von Aufnahmekörpern (10, 102) an einer Montagestruktur (210) an dem Basiskörper (204);
wobei die Steckelemente (206) mittels flexibler Verbindungselemente (220), insbesondere Verbindungsgurte und/oder Verbindungsseile, an dem Basiskörper (204) befestigt sind;
wobei die Steckelemente (206) als Isofix-Steckelemente ausgebildet sind, die zum Verankern an Isofix-Fixierstrukturen des Kraftfahrzeugsitzes (202) eingerichtet sind;
wobei eine an dem Basiskörper (204) angebrachte Führungsaufnahme (224) zum geführten Aufnehmen der Steckelemente (206) ausgebildet ist.

15. Verfahren gemäß Anspruch 14, wobei die Montageeinrichtung (200) zusätzlich mittels eines Fahrgastsicherungsgurts an dem Kraftfahrzeugsitz (202) befestigt wird.

## Claims

1. A mounting apparatus (200) for mounting an adapter device (100) for fastening container bodies (10, 102), particularly at least one suitcase, on a motor vehicle seat (202), wherein the mounting apparatus (200) comprises:
a base body (204) for being placed on the motor vehicle seat (202);
plug elements (206), which are arranged on the base body (204) and designed for anchoring the mounting apparatus (200) on fixing structures (208) of the motor vehicle seat (202);
a mounting structure (210) on the base body (204), which is designed for mounting the adapter device (100) for fastening container bodies (10, 102);
wherein the plug elements (206) are fastened on the base body (204) by means of flexible connecting elements (220), particularly connecting belts and/or connecting cables;
**characterized in that**:
the plug elements (206) are realized in the form of Isofix plug elements, which are designed for being anchored on Isofix fixing structures of the motor vehicle seat (202);
and the mounting apparatus (200) comprises a guide receptacle (224), which is arranged on the base body (204) and serves for receiving the plug elements (206) in a guided manner.

2. The mounting apparatus (200) according to claim 1, wherein the base body (204) is realized in the form of a rod assembly structure, particularly a metal rod assembly structure, wherein the rod assembly structure particularly comprises first rod assemblies (212), which lie opposite of one another and particularly extend parallel to one another, wherein said first rod assemblies extend along a seat surface (214) of the motor vehicle seat (202) and are located underneath the adapter device (100) in the mounted state of the adapter device (100).

3. The mounting apparatus (200) according to claim 2, wherein the rod assembly structure comprises second rod assemblies (216), which lie opposite of one another and are particularly realized in a loop-shaped manner, wherein said second rod assemblies respectively extend at least sectionally in the direction along a backrest (218) of the motor vehicle seat (202) and at least one of the second rod assemblies vertically extends at least sectionally beyond at least a part of the adapter device (100) in the mounted state of the adapter device (100), wherein one of the second rod assemblies (216) adjacent to the backrest (218) vertically extends significantly farther upward than another second rod assembly (216) and, in particular, has at least three-times the vertical length of this other second rod assembly, which forms an end of the base body (204) that is located farthest from the backrest (218).

4. The mounting apparatus (200) according to one of claims 1-3 with at least one of the following characteristic features:
wherein the mounting structure (210) comprises mounting holes on the base body (204), which particularly extend vertically and in an elongate manner, and mounting bolts, particularly mounting screws, for leading through the mounting holes and through corresponding fastening holes (122) of the adapter device (100), wherein the adapter device (100) can be mounted by inserting the mounting bolts into the mounting holes and the fastening holes (122) and by fastening, particularly screwing, the mounting bolts in the mounting holes and/or the fastening holes on the mounting apparatus (200);
comprising a tensioning device (222), which can be actuated by a user in order to tension the flexible connecting elements (220) after the plug elements (206) have been anchored on the fixing structures (208) ;
wherein the plug elements (206) are designed for being anchored on fixing structures (208) between the backrest (218) and the seat surface (214) of the motor vehicle seat (202) and for thereby realizing an anchoring in the interior of the motor vehicle seat (202);
comprising an adjusting device, which is designed for adjusting a height and/or an angle of inclination of the adapter device (100) mounted on the mounting apparatus (200);
comprising rollers, which are arranged or can be arranged on the bottom side of the base body (204) in order to move the mounting apparatus (200) in a rolling manner in its state, in which it is separated from the motor vehicle seat (202).

5. A mounting device (250) for fastening container bodies (10, 102) on a motor vehicle seat (202), comprising:
an adapter device (100) for fastening container bodies (10, 102);
a mounting apparatus (200) according to one of claims 1-4, on the mounting structure (210) of which the adapter device (100) is mounted.

6. The mounting device (250) according to claim 5, wherein the adapter device (100) is designed for fastening container bodies (10, 102) of different sizes and particularly comprises:
a carrier device (104) for carrying a fastened container body (10, 102);
first coupling structures (106-108) on the carrier device (104), which are designed for fastening a first container body (10) of a first size by means of pushing and locking on the first coupling structures (106-108);
second coupling structures (110-112) on the carrier device (104), which are designed for fastening a second container body (102) of a second size by means of pushing and locking on the second coupling structures (110-112).

7. The mounting device (250) according to claim 6, wherein the first coupling structures (106-108) comprise at least one first guide rail (106), particularly two parallel first guide rails (106) spaced apart from one another by a first distance, wherein the first container body (10) can be pushed on along the at least one first guide rail (106) as far as a first locking position.

8. The mounting device (250) according to claim 7, wherein the second coupling structures (110-112) comprise at least one second guide rail (110), particularly two parallel second guide rails (110) spaced apart from one another by a second distance that differs from the first distance, wherein the second container body (102) can be pushed on along the at least one second guide rail (110) as far as a second locking position.

9. The mounting device (250) according to claim 7 or 8, wherein the first coupling structures (106-108) comprise at least one first locking body (108), particularly at least two blocking bodies (108) that are spaced apart from one another along the at least one first guide rail (106), wherein the at least one first locking body (108) is designed for locking the first container body (10) on the adapter device (100) in a vertically irremovable manner in the first locking position when the first container body (10) is pushed on along the at least one first guide rail (106) as far as the first locking position.

10. The mounting device (250) according to claim 8 or 9, wherein the second coupling structures (110-112) comprise at least one second locking body (112), particularly two or more locking bodies (112) that are spaced apart from one another along the at least one second guide rail (110), wherein the at least one second locking body (102) is designed for locking the second container body (102) on the adapter device (100) in a vertically irremovable manner in the second locking position when the second container body (102) is pushed on along the at least one second guide rail (110) as far as the second locking position, wherein the at least one of first locking body (108) and/or the at least one second locking body (112) particularly can be displaced into the respective guide rail (106, 110) angularly such that a gap remains between a bottom of the respective guide rail (106, 110) and the respective locking body (110, 112), particularly prior to locking or for locking the respective container body (10, 102).

11. The mounting device (250) according to one of claims 6-10 with at least one of the following characteristic features:
wherein the first coupling structures (106-108) and/or the second coupling structures (110-112) are designed in such a way that the first container body (10) or the second container body (102) can be stacked on the adapter device (100) in a selectively vertically removable and non-displaceable manner by means of the coupling structures (106-108, 110-112) or can be coupled to one another in a vertically irremovable manner by being pushed and locked on the first coupling structures (106-108) and/or on the second coupling structures (110-112), wherein the at least one first locking body (108) and/or the at least one second locking body (112) particularly is or are designed in such a way that the first container body (10) and/or the second container body (102) can be stacked on the adapter device (100) in a vertically removable and non-displaceable manner by means of one of the respective locking bodies (108, 112);
wherein the carrier device (104) is realized in the form of a carrier plate;
comprising at least one limit stop structure (114), which particularly can be folded in and out relative to the carrier device (104) and is designed in such a way that the respective container body (10, 102) comes in contact with the at least one limit stop structure (114) in a locking position, in which the respective container body (10, 102) can be locked or is locked on the adapter device (100), after the first container body (10) and/or the second container body (102) has been pushed on;
wherein the first coupling structures (106-108) and/or the second coupling structures (110-112) furthermore comprise a first additional locking device (107) for additionally locking the first container body (10) in a non-displaceable manner when this first container body is pushed and locked on the carrier device (104) and/or a second additional locking device (111) for additionally locking the second container body (102) in a non-displaceable manner when this second container body is pushed and locked on the carrier device (104);
wherein the adapter device (100) comprises fastening holes (122) for fastening the adapter device (100) on the mounting apparatus (200), particularly fastening holes for receiving mounting bolts of the mounting structure (210) of the mounting apparatus (200).

12. A mounting arrangement (280), comprising:
a mounting device (250) according to one of claims 5-11;
at least one container body (10, 102), which is fastened on the adapter device (100).

13. The mounting arrangement (280) according to claim 12, wherein the at least one container body is selected from a group consisting of a suitcase (10, 102) for transporting transport goods, a first suitcase (10) of a first size and a second suitcase (102) of a second size, an additional adapter device (100) and a storage box (352).

14. A method for mounting an adapter device (100) for fastening container bodies (10, 102) on a motor vehicle seat (202), wherein the method comprises:
placing a base body (204) of a mounting apparatus (200) on the motor vehicle seat (202);
anchoring the mounting apparatus (200) on fixing structures (208) of the motor vehicle seat (202) by means of plug elements (206) arranged on the base body (204);
mounting the adapter device (100) for fastening container bodies (10, 102) on a mounting structure (210) on the base body (204);
wherein the plug elements (206) are fastened on the base body (204) by means of flexible connecting elements (220), particularly connecting belts and/or connecting cables;
wherein the plug elements (206) are realized in the form of Isofix plug elements, which are designed for being anchored on Isofix fixing structures of the motor vehicle seat (202);
wherein a guide receptacle (224) arranged on the base body (204) is designed for receiving the plug elements (206) in a guided manner.

15. The method according to claim 14, wherein the mounting apparatus (200) is additionally fastened on the motor vehicle seat (202) by means of a passenger safety belt.

## Revendications

1. Système de montage (200) destiné à monter un dispositif adaptateur (100) pour fixer des organes de réception (10, 102), notamment au moins un coffre sur un siège de véhicule automobile (202), le système de montage (200) comportant :
un corps de base (204) à placer sur le siège de véhicule automobile (202) ;
des éléments d'emboîtement (206), qui sont montés sur le corps de base (204) et qui sont aménagés pour l'ancrage du système de montage (200) sur des structures de fixation (208) du siège de véhicule automobile (202) ;
une structure de montage (210) sur le corps de base (204), qui est aménagée pour le montage du dispositif adaptateur (100) pour fixer des organes de réception (10, 102) ;
les éléments d'emboîtement (206) étant fixés sur le corps de base (204) à l'aide d'éléments d'assemblage (220) souples, notamment de sangles d'assemblage et/ou de câbles d'assemblage ;
**caractérisé en ce que** :
les éléments d'emboîtement (206) sont conçus sous la forme d'éléments d'emboîtement ISOFIX, qui sont aménagés pour un ancrage sur des structures de fixation ISOFIX du siège de véhicule automobile (202) ;
et le système de montage (200) comporte un logement de guidage (224) monté sur le corps de base (204), pour le logement guidé des éléments d'emboîtement (206).

2. Système de montage (200) selon la revendication 1, le corps de base (204) étant conçu sous la forme d'une structure en tringlerie, notamment d'une structure en tringlerie métallique, notamment la structure en tringlerie comportant des premières tringleries (212) mutuellement opposées, notamment s'écoulant en parallèle, qui s'étendent le long d'une surface d'assise (214) du siège de véhicule automobile (202) et qui en position montée du dispositif adaptateur (100) se situent en-dessous du dispositif adaptateur (100) .

3. Système de montage (200) selon la revendication 2, la structure en tringlerie comportant des deuxièmes tringleries (216) mutuellement opposées, notamment en forme de boucles, qui s'étendent chacune au moins par segments dans la direction le long d'un dossier (218) du siège de véhicule automobile (202) et parmi lesquelles, en position montée du dispositif adaptateur (100), au moins l'une s'étend au moins par segments à la verticale au-delà d'au moins une partie du dispositif adaptateur (100), notamment l'une des deuxièmes tringleries (216) s'étendant sensiblement plus loin vers le haut à la verticale en jouxtant le dossier (218), présentant notamment une longueur d'extension verticale au moins triple de celle d'une autre deuxième tringlerie (216), qui forme une extrémité du corps de base (204) la plus éloignée du dossier (218).

4. Système de montage (200) selon l'une quelconque des revendications 1 à 3, présentant au moins l'une des caractéristiques suivantes :
la structure de montage (210) comportant des trous de montage, s'écoulant notamment à la verticale et en extension longitudinale sur le corps de base (204) et des boulons de montage, notamment des vis de montage, destiné(e)s à traverser les trous de montage et des trous de fixation (122) correspondants du dispositif adaptateur (100), le dispositif adaptateur (100) étant susceptible d'être monté sur le système de montage (200) par introduction des boulons de montage dans les trous de montage et les trous de fixation (122) et par fixation, notamment vissage des boulons de montage sur les trous de montage et/ou les trous de fixation ;
comportant un dispositif de serrage (222), susceptible d'être actionné par un utilisateur, pour serrer les éléments d'assemblage (220) souples après l'ancrage des éléments d'emboîtement (206) sur les structures de fixation (208) ;
les éléments d'emboîtement (206) étant conçus pour être ancrés sur des structures de fixation (208) entre le dossier (218) et la surface d'assise (214) du siège de véhicule automobile (202) et pour créer ainsi un ancrage à l'intérieur du siège de véhicule automobile (202) ;
comportant un système de réglage qui est aménagé pour régler une hauteur et/ou un angle d'inclinaison du dispositif adaptateur (100) monté sur le système de montage (200) ;
comportant des galets, qui du côté du sol sont ou peuvent être montés sur le corps de base (204), pour déplacer en roulant le système de montage (200) dans une position séparée du siège de véhicule automobile (202) .

5. Dispositif de montage (250) destiné à fixer des corps de logement (102) sur un siège de véhicule automobile (202), comportant :
un dispositif adaptateur (100) pour la fixation d'organes de réception (10, 102) ;
un système de montage (200) selon l'une quelconque des revendications 1 à 4, sur la structure de montage (210) duquel est monté le dispositif adaptateur (100).

6. Dispositif de montage (250) selon la revendication 5, le dispositif adaptateur (100) étant conçu pour fixer des organes de réception (10, 102) de différentes dimensions et comportant notamment :
un système de support (104) pour porter un organe de réception (10, 102) ;
des premières structures d'accouplement (106 à 108) sur le système de support (104), qui sont conçues pour fixer un premier organe de réception (10) d'une première dimension par emboîtement et verrouillage sur les premières structures d'accouplement (106 à 108) ;
des deuxièmes structures d'accouplement (110 à 112) sur le système de support (104), qui sont conçues pour fixer un deuxième organe de réception (102) d'une deuxième dimension par emboîtement et verrouillage sur les deuxièmes structures d'accouplement (110 à 112).

7. Dispositif de montage (250) selon la revendication 6, les premières structures d'accouplement (106 à 108) comportant au moins un premier rail de guidage (106), notamment deux premiers rails de guidage (106) mutuellement parallèles et écartés l'un de l'autre d'un premier écart, le premier organe de réception (10) étant emboîtable le long de l'au moins un premier rail de guidage (106) jusqu'à une première position de verrouillage.

8. Dispositif de montage (250) selon la revendication 7, les deuxièmes structures d'accouplement (110 à 112) comportant au moins un deuxième rail de guidage (110), notamment deux deuxièmes rails de guidage (110) mutuellement parallèles et écartés l'un de l'autre d'un deuxième écart différent du premier écart, le deuxième organe de réception (102) étant emboîtable le long de l'au moins un deuxième rail de guidage (110) jusqu'à une deuxième position de verrouillage.

9. Dispositif de montage (250) selon la revendication 7 ou 8, les premières structures d'accouplement (106 à 108) comportant au moins un premier organe de verrouillage (108), notamment au moins deux organes de verrouillage (108) écartés le long de l'au moins un premier rail de guidage (106), lors de l'emboîtement du premier organe de réception (10) le long de l'au moins un premier rail de guidage (106) jusqu'à la première position de verrouillage, l'au moins un premier organe de verrouillage (108) étant conçu pour le verrouillage vertical inamovible dans la première position de verrouillage du premier organe de réception (10) sur le dispositif adaptateur (100).

10. Dispositif de montage (250) selon la revendication 8 ou 9, les deuxièmes structures d'accouplement (110 à 112) comportant au moins un deuxième organe de verrouillage (112), notamment deux deuxièmes organes de verrouillage (112) ou plus, écartés le long de l'au moins un deuxième rail de guidage (110), lors de l'emboîtement du deuxième organe de réception (102) le long de l'au moins un deuxième rail de guidage (110) jusqu'à la deuxième position de verrouillage, l'au moins un deuxième organe de verrouillage (102) étant conçu pour le verrouillage vertical inamovible dans la deuxième position de verrouillage du deuxième organe de réception (102) sur le dispositif adaptateur (100), notamment avant un verrouillage ou pour le verrouillage de l'organe de réception (10, 102) concerné, notamment l'au moins un premier organe de verrouillage (108) et/ou l'au moins un deuxième organe de verrouillage (112) étant déplaçable dans le rail de guidage (106, 110) concerné de manière angulaire, notamment en laissant libre un interstice entre un fond inférieur du rail de guidage (106, 110) concerné et l'organe de verrouillage (110, 112) concerné.

11. Dispositif de montage (250) selon l'une quelconque des revendications 6 à 10, présentant au moins l'une des caractéristiques suivantes :
les premières structures d'accouplement (106 à 108) et/ou les deuxièmes structures d'accouplement (110 à 112) étant conçues de telle sorte que le premier organe de réception (10) ou le deuxième organe de réception (102) soit empilable sélectivement, de manière amovible à la verticale mais bloquée en déplacement au moyen des structures d'accouplement (106 à 108, 110 à 112) sur le dispositif adaptateur (100) ou qu'au moyen de l'emboîtement et du verrouillage sur les premières structures d'accouplement (106 à 108) et/ou sur les deuxièmes structures d'accouplement (110 à 112) puissent s'accoupler l'un avec l'autre de manière inamovible à la verticale, notamment l'au moins un premier organe de verrouillage (108) et/ou l'au moins un deuxième organe de verrouillage (112) étant conçu ou conçus de telle sorte que le premier organe de réception (10) et/ou le deuxième organe de réception (102) soit empilable de manière amovible à la verticale mais bloquée en déplacement au moyen d'un organe de verrouillage (108, 112) concerné sur le dispositif adaptateur (100) ;
le système de support (104) étant conçu sous la forme d'une plaque de support ;
comportant au moins une structure de butée (114), notamment rabattable et déployable par rapport au système de support (104), qui est aménagée de sorte qu'après l'emboîtement du premier organe de réception (10) et/ou du deuxième organe de réception (102), l'organe de réception (10, 102) concerné bute sur l'au moins une structure de butée (114) dans une position de verrouillage dans laquelle l'organe de réception (10, 102) concerné est verrouillable ou verrouillé sur le dispositif adaptateur (100) ;
les premières structures d'accouplement (106 à 108) et/ou les deuxièmes structures d'accouplement (110 à 112) comportant par ailleurs un premier système de verrouillage auxiliaire (107) pour le verrouillage supplémentaire bloqué en déplacement du premier organe de réception (10), lorsque celui-ci est emboîté et verrouillé sur le système de support (104) et/ou un deuxième système de verrouillage auxiliaire (111) pour le verrouillage supplémentaire bloqué en déplacement du deuxième organe de réception (102) lorsque celui-ci est emboîté et verrouillé sur le système de support (104) ;
le dispositif adaptateur (100) comportant des trous de fixation (122) pour la fixation du dispositif adaptateur (100) sur le système de montage (200), notamment des trous de fixation destinés à recevoir de boulons de montage de la structure de montage (210) du système de montage (200).

12. Agencement de montage (280), comportant :
un dispositif de montage (250) selon l'une quelconque des revendications 5 à 11 ;
au moins un organe de réception (10, 102), lequel est fixé sur le dispositif adaptateur (100).

13. Agencement de montage (280) selon la revendication 12, l'au moins un organe de réception étant sélectionné dans un groupe qui comprend un coffre (10, 102) destiné au transport de produits à transporter, un premier coffre (10) d'une première dimension et un deuxième coffre (102) d'une deuxième dimension, un dispositif adaptateur (100) supplémentaire et une boîte de rangement (352).

14. Procédé destiné à monter un dispositif adaptateur (100) pour la fixation d'organes de réception (10, 102) sur un siège de véhicule automobile (202), le procédé comportant :
le placement d'un corps de base (204) d'un système de montage (200) sur le siège de véhicule automobile (202) ;
l'ancrage du système de montage (200) sur des structures de fixation (208) du siège de véhicule automobile (202) à l'aide d'éléments d'emboîtement (206), qui sont montés sur le corps de base (204) ;
le montage du dispositif adaptateur (100) pour la fixation d'organes de réception (10, 102) sur une structure de montage (210) sur le corps de base (204) ;
les éléments d'emboîtement (206) étant fixés sur le corps de base (204) à l'aide d'éléments d'assemblage (220) souples, notamment de sangles d'assemblage et/ou de câbles d'assemblage ;
les éléments d'emboîtement (206) étant conçus sous la forme d'éléments d'emboîtement ISOFIX qui sont aménagés pour l'ancrage sur des structures de fixation ISOFIX du siège de véhicule automobile (202) ;
un logement de guidage (224) monté sur le corps de base (204) étant conçu pour le logement guidé des éléments d'emboîtement (206).

15. Procédé selon la revendication 14, le système de montage (200) étant fixé en supplément à l'aide d'une ceinture de sécurité passager sur le siège de véhicule automobile (202).
